# EUROPEAN PATENT APPLICATION

(11) **EP 4 503 734 A1**
(43) Date of publication of application: **05.02.2025**
(21) Application number: 23778120.8
(22) Date of filing: 27.03.2023
(51) Int. Cl.: H04W 36/00

(54) **RANDOM ACCESS METHOD, DEVICE, AND STORAGE MEDIUM**

(30) Priority: 28.03.2022 CN 202210315016
(71) Applicant: Spreadtrum Communications (Shanghai) Co., Ltd., Shanghai 201203 (CN)
(72) Inventor: ZHOU, Huayu, Shanghai 201203 (CN); ZHAO, Sicong, Shanghai 201203 (CN); LEI, Zhenzhu, Shanghai 201203 (CN); PAN, Zhengang, Shanghai 201203 (CN)
(74) Representative: advotec.
(86) International application number: PCT/CN2023/084139
(87) International publication number: WO 2023/185755

(57) **Abstract**

Embodiments of the present disclosure provide a random access method, a device, and a storage medium. The random access method is applied to a terminal device and includes: determining a physical random access channel (PRACH) window or determining a PRACH burst. In the random access method provided in the embodiments of the present disclosure, the terminal device determines the PRACH window or the PRACH burst, to ensure that a time when the terminal device sends a preamble is synchronized with a time when a non-anchor cell is activated. In this way, the preamble sent by the terminal device may be synchronously detected or received after the non-anchor cell is activated. This may reduce activity of the non-anchor cell to periodically detect a PRACH and avoid an excessive random access delay, to achieve network energy saving (NES) and load balancing.

## Description

### CROSS-REFERENCE TO RELATED APPLICATIONS

The present disclosure claims priority to Chinese Patent Application No. 202210315016.6, filed with the China National Intellectual Property Administration on March 28, 2022 and entitled "RANDOM ACCESS METHOD, DEVICE, AND STORAGE MEDIUM", which is incorporated herein by reference in its entirety.

### TECHNICAL FIELD

Embodiments of the present disclosure relate to the field of communication technologies, and in particular, to a random access method, a device, and a storage medium.

### BACKGROUND

Network energy saving (NES) may reduce operating costs and is beneficial to environmental protection. For example, there are many frequency resources in a 5G network. Cells corresponding to some frequency bands may be deactivated if possible when a network load is low and activated when needed, to achieve NES. The cells that may be deactivated or activated may be referred to as non-anchor cells. NES may be achieved by dynamically activating/deactivating the non-anchor cells. In addition, a random access process is supported to achieve load balancing.

However, the non-anchor cells are activated on demand, and different activation times and corresponding user equipment (UE) behaviors may result in a failure to achieve NES or load balancing. Therefore, the activation times of the non-anchor cells and corresponding UE behaviors are problems to be resolved urgently.

### SUMMARY

Embodiments of the present disclosure provide a random access method, a device, and a storage medium, to initiate random access on a non-anchor cell. This may achieve NES and load balancing.

According to a first aspect, the embodiments of the present disclosure provide a random access method, applied to a terminal device and including:
determining a physical random access channel (PRACH) window or determining a PRACH burst.

In the foregoing random access method provided in the embodiments of the present disclosure, the terminal device determines the PRACH window or the PRACH burst, which may ensure that a time when the terminal device sends a preamble is synchronized with a time when a non-anchor cell is activated. In this way, the preamble sent by the terminal device may be detected or received after the non-anchor cell is activated. This may reduce activity of the non-anchor cell to periodically detect a PRACH and avoid an excessive random access delay.

In a possible implementation, the determining the PRACH window includes:
determining that a PRACH in the PRACH window is valid.

A period of detecting or receiving a PRACH by the non-anchor cell, a period of the PRACH window, and a period of PRACH resources in the PRACH window may be associated by determining that the PRACH in the PRACH window is valid. This ensures that a preamble sent by the terminal device on the PRACH resource in the PRACH window may be detected or received by the non-anchor cell. In this way, the terminal device does not need to send the preamble for a plurality of times. In addition, the non-anchor cell does not need to reduce the period of detecting or receiving a PRACH.

In a possible implementation, the determining that the PRACH in the PRACH window is valid includes:
determining a period and/or length of the PRACH window.

In a possible implementation, the determining the period and/or length of the PRACH window includes:
determining the period and/or length of the PRACH window according to a higher-layer parameter.

In a possible implementation, the determining the PRACH burst includes:
determining that a PRACH in the PRACH burst is valid.

In a possible implementation, the determining that the PRACH in the PRACH burst is valid includes:
determining a period and/or duration of the PRACH burst.

In a possible implementation, the determining the period and/or duration of the PRACH burst includes:
determining the period and/or duration of the PRACH burst according to a higher-layer parameter.

In a possible implementation, the determining the period of the PRACH burst includes:
determining a PRACH period in the period of the PRACH burst.

In a possible implementation, the period of the PRACH burst is greater than the PRACH period in the period of the PRACH burst.

According to a second aspect, the embodiments of the present disclosure provide a random access method, applied to a terminal device and including:
determining a configuration of a target cell.

In the foregoing random access method provided in the embodiments of the present disclosure, at least one of a configuration of a PRACH, a random access response (RAR), an initial downlink bandwidth part (DL BWP) and/or an initial uplink bandwidth part (UL BWP), and small data transmission (SDT) on the target cell (namely the non-anchor cell) may be determined according to a parameter, such as SIB 1, on a source cell (namely an anchor cell). In this way, the terminal device may use at least one of a resource of the PRACH, a resource of RAR, a resource of initial DL BWP and/or initial UL BWP, and a resource of SDT.

In a possible implementation, the configuration of the target cell includes at least one of the following:
a configuration of a PRACH, a configuration of a RAR search space, a configuration of an initial DL BWP, a configuration of an initial UL BWP, and a configuration of SDT on the target cell.

In a possible implementation, the determining the configuration of the target cell includes:
determining the configuration of the target cell according to a parameter on a source cell.

In a possible implementation, the configuration of the RAR search space includes a control resource set (CORESET) associated with the RAR search space.

According to a third aspect, the embodiments of the present disclosure provide a random access method, applied to a terminal device and including:
determining, based on a cell switch indication, to initiate random access on a target cell.

In the foregoing random access method provided in the embodiments of the present disclosure, the terminal device may determine, based on the cell switch indication sent by a network, to initiate random access on the target cell (namely a non-anchor cell).

In a possible implementation, the cell switch indication is carried by a paging physical downlink control channel (PDCCH).

In a possible implementation, the cell switch indication is carried by a paging message.

In a possible implementation, the cell switch indication is carried by a system information block (SIB).

In a possible implementation, the determining, based on the cell switch indication, to initiate random access on the target cell includes:
determining, by the terminal device based on the cell switch indication, to initiate random access on the target cell when determining that one of the following conditions is satisfied: detecting a wake-up signal (WUS), detecting a paging early indication (PEI), detecting a paging PDCCH, and detecting that a paging message contains an identifier of the terminal device.

In a possible implementation, the detecting the WUS includes: detecting a signal or channel corresponding to the WUS, or detecting an indication in a signal or channel corresponding to the WUS.

In a possible implementation, the detecting the PEI includes: detecting a signal or channel corresponding to the PEI, or detecting an indication in a signal or channel corresponding to the PEI.

In a possible implementation, after the determining, based on the cell switch indication, to initiate random access on the target cell, the method further includes:
initiating, by the terminal device, random access after a first delay.

In a possible implementation, after the determining, based on the cell switch indication, to initiate random access on the target cell, the method further includes:
initiating, by the terminal device, random access after a second delay.

In a possible implementation, after the determining, based on the cell switch indication, to initiate random access on the target cell, the method further includes:
initiating, by the terminal device, random access after a third delay, where the third delay is the larger one of a first delay and a second delay, or the third delay is a sum of the first delay and the second delay.

In a possible implementation, a value of the first delay is predefined.

In a possible implementation, a value of the first delay is indicated by a bit in a paging PDCCH.

In a possible implementation, a value of the first delay is indicated by a field in a paging message.

In a possible implementation, a value of the first delay is indicated by a field in a SIB.

In a possible implementation, a value of the first delay is greater than or equal to a minimum interval reported by the terminal device.

In a possible implementation, a value of the second delay is predefined.

In a possible implementation, a value of the second delay is indicated by a bit in a paging PDCCH.

In a possible implementation, a value of the second delay is indicated by a field in a paging message.

In a possible implementation, a value of the second delay is indicated by a field in a SIB.

In a possible implementation, a value of the second delay is greater than or equal to a switch time of the target cell.

In a possible implementation, after the determining, based on the cell switch indication, to initiate random access on the target cell, the method further includes:
starting a first timer when receiving the cell switch indication; and
determining to initiate random access on a source cell when the first timer expires.

According to a fourth aspect, the embodiments of the present disclosure provide a random access method, applied to a terminal device and including:
determining, based on a cell switch indication, to complete random access on a target cell.

In the foregoing random access method provided in the embodiments of the present disclosure, a network may indicate, through a RAR, the terminal device to switch to a non-anchor cell to complete random access.

In a possible implementation, the cell switch indication is a bit in a RAR PDCCH.

In a possible implementation, the cell switch indication is a bit in a RAR media access control (MAC) control entity (CE) or a field in a RAR message.

In a possible implementation, the cell switch indication is a field in a message 4.

In a possible implementation, the cell switch indication is a field in a SIB.

According to a fifth aspect, the embodiments of the present disclosure provide a terminal device, including:
a first determining module configured to determine a PRACH window or determine a PRACH burst.

The technical solution in the fifth aspect of the embodiments of the present disclosure is consistent with the technical solution in the first aspect of the embodiments of the present disclosure. Beneficial effects achieved in each aspect and corresponding feasible implementations are similar. Details are not described herein again.

In a possible implementation, the first determining module includes:
a first determining unit configured to determine that a PRACH in the PRACH window is valid.

In a possible implementation, the first determining unit is specifically configured to determine a period and/or length of the PRACH window.

In a possible implementation, the first determining unit is specifically further configured to determine the period and/or length of the PRACH window according to a higher-layer parameter.

In a possible implementation, the first determining module further includes:
a second determining unit configured to determine that a PRACH in the PRACH burst is valid.

In a possible implementation, the second determining unit is specifically configured to determine a period and/or duration of the PRACH burst.

In a possible implementation, the second determining unit is specifically further configured to determine the period and/or duration of the PRACH burst according to a higher-layer parameter.

In a possible implementation, the second determining unit is specifically further configured to determine a PRACH period in the period of the PRACH burst.

In a possible implementation, the period of the PRACH burst is greater than the PRACH period in the period of the PRACH burst.

According to a sixth aspect, the embodiments of the present disclosure provide a terminal device, including:
a second determining module configured to determine a configuration of a target cell.

The technical solution in the sixth aspect of the embodiments of the present disclosure is consistent with the technical solution in the second aspect of the embodiments of the present disclosure. Beneficial effects achieved in each aspect and corresponding feasible implementations are similar. Details are not described herein again.

In a possible implementation, the configuration of the target cell includes at least one of the following:
a configuration of a PRACH, a configuration of a RAR search space, a configuration of an initial DL BWP, a configuration of an initial UL BWP, and a configuration of SDT on the target cell.

In a possible implementation, the second determining module is specifically configured to determine the configuration of the target cell according to a parameter on a source cell.

In a possible implementation, the configuration of the RAR search space includes a CORESET associated with the RAR search space.

According to a seventh aspect, the embodiments of the present disclosure provide a terminal device, including:
a third determining module configured to determine, based on a cell switch indication, to initiate random access on a target cell.

The technical solution in the seventh aspect of the embodiments of the present disclosure is consistent with the technical solution in the third aspect of the embodiments of the present disclosure. Beneficial effects achieved in each aspect and corresponding feasible implementations are similar. Details are not described herein again.

In a possible implementation, the cell switch indication is carried by a paging PDCCH.

In a possible implementation, the cell switch indication is carried by a paging message.

In a possible implementation, the cell switch indication is carried by a SIB.

In a possible implementation, the third determining module is specifically configured to:
determine, based on the cell switch indication, to initiate random access on the target cell when determining that one of the following conditions is satisfied: detecting a WUS, detecting a PEI, detecting a paging PDCCH, and detecting that a paging message contains an identifier of the terminal device.

In a possible implementation, the detecting the WUS includes: detecting a signal or channel corresponding to the WUS, or detecting an indication in a signal or channel corresponding to the WUS.

In a possible implementation, the detecting the PEI includes: detecting a signal or channel corresponding to the PEI, or detecting an indication in a signal or channel corresponding to the PEI.

In a possible implementation, the terminal device further includes:
a first initiation module configured to: after the third determining module determines, based on the cell switch indication, to initiate random access on the target cell, initiate random access after a first delay.

In a possible implementation, the terminal device further includes:
a second initiation module configured to: after the third determining module determines, based on the cell switch indication, to initiate random access on the target cell, initiate random access after a second delay.

In a possible implementation, the terminal device further includes:
a third initiation module configured to: after the third determining module determines, based on the cell switch indication, to initiate random access on the target cell, initiate random access after a third delay, where the third delay is the larger one of a first delay and a second delay, or the third delay is a sum of the first delay and the second delay.

In a possible implementation, a value of the first delay is predefined.

In a possible implementation, a value of the first delay is indicated by a bit in a paging PDCCH.

In a possible implementation, a value of the first delay is indicated by a field in a paging message.

In a possible implementation, a value of the first delay is indicated by a field in a SIB.

In a possible implementation, a value of the first delay is greater than or equal to a minimum interval reported by the terminal device.

In a possible implementation, a value of the second delay is predefined.

In a possible implementation, a value of the second delay is indicated by a bit in a paging PDCCH.

In a possible implementation, a value of the second delay is indicated by a field in a paging message.

In a possible implementation, a value of the second delay is indicated by a field in a SIB.

In a possible implementation, a value of the second delay is greater than or equal to a switch time of the target cell.

In a possible implementation, the terminal device further includes a first timer, a starting module, and a fifth determining module.

The starting module is configured to start the first timer when the cell switch indication is received.

The fifth determining module is configured to determine to initiate random access on a source cell when the first timer expires.

According to an eighth aspect, the embodiments of the present disclosure provide a terminal device, including:
a fourth determining module configured to determine, based on a cell switch indication, to complete random access on a target cell.

The technical solution in the eighth aspect of the embodiments of the present disclosure is consistent with the technical solution in the fourth aspect of the embodiments of the present disclosure. Beneficial effects achieved in each aspect and corresponding feasible implementations are similar. Details are not described herein again.

In a possible implementation, the cell switch indication is a bit in a RAR PDCCH.

In a possible implementation, the cell switch indication is a bit in a RAR MAC CE or a field in a RAR message.

In a possible implementation, the cell switch indication is a field in a message 4.

In a possible implementation, the cell switch indication is a field in a SIB.

According to a ninth aspect, the embodiments of the present disclosure provides a chip system, including: a communication interface configured to input and/or output information; and a processor configured to call a computer program, to enable a device in which the chip system is installed to perform the method according to the first to fourth aspects of the present disclosure.

According to a tenth aspect, the embodiments of the present disclosure provide a terminal device, including: at least one processor; and at least one memory communicatively connected to the processor. The memory stores a computer program executable by the processor. The processor runs the computer program to perform the method according to the first to fourth aspects of the present disclosure.

According to an eleventh aspect, the embodiments of the present disclosure provide a computer-readable storage medium. The computer-readable storage medium stores a computer program. The computer program enables a computer to perform the method according to the first to fourth aspects of the present disclosure.

It should be understood that the technical solutions in the ninth to eleventh aspects of the embodiments of the present disclosure are consistent with the technical solutions in the first to fourth aspects of the embodiments of the present disclosure. Beneficial effects achieved in each aspect and corresponding feasible implementations are similar. Details are not described herein again.

### BRIEF DESCRIPTION OF DRAWINGS

To describe the technical solutions in the embodiments of the present disclosure more clearly, the following briefly describes the accompanying drawings required in the embodiments. Apparently, the accompanying drawings in the following description show merely some embodiments of the present disclosure, and a person of ordinary skill in the art may still derive other drawings from these accompanying drawings without creative efforts.
FIG. 1 is a schematic diagram of an application scenario according to an embodiment of the present disclosure;
FIG. 2 is a flowchart of a random access method according to an embodiment of the present disclosure;
FIG. 3 is a schematic diagram of interaction between a terminal device and a non-anchor cell according to an embodiment of the present disclosure;
FIG. 4 is a flowchart of a random access method according to another embodiment of the present disclosure;
FIG. 5 is a schematic diagram of a valid PRACH in a PRACH window according to an embodiment of the present disclosure;
FIG. 6 is a flowchart of a random access method according to another embodiment of the present disclosure;
FIG. 7 is a schematic diagram of a PRACH burst according to an embodiment of the present disclosure;
FIG. 8 is a flowchart of a random access method according to another embodiment of the present disclosure;
FIG. 9 is a flowchart of a random access method according to another embodiment of the present disclosure;
FIG. 10 is a flowchart of a random access method according to another embodiment of the present disclosure;
FIG. 11 is a flowchart of a random access method according to another embodiment of the present disclosure;
FIG. 12 is a flowchart of a random access method according to another embodiment of the present disclosure;
FIG. 13 is a flowchart of a random access method according to another embodiment of the present disclosure;
FIG. 14 is a flowchart of a random access method according to another embodiment of the present disclosure;
FIG. 15 is a flowchart of a random access method according to another embodiment of the present disclosure;
FIG. 16 is a flowchart of a random access method according to another embodiment of the present disclosure;
FIG. 17 is a schematic structural diagram of a terminal device according to an embodiment of the present disclosure;
FIG. 18 is a schematic structural diagram of a terminal device according to another embodiment of the present disclosure;
FIG. 19 is a schematic structural diagram of a terminal device according to another embodiment of the present disclosure;
FIG. 20 is a schematic structural diagram of a terminal device according to another embodiment of the present disclosure; and
FIG. 21 is a schematic structural diagram of a terminal device according to another embodiment of the present disclosure.

### DESCRIPTION OF EMBODIMENTS

The terms "first" and "second" mentioned below are merely intended for a purpose of description, and shall not be understood as an indication or implication of relative importance or implicit indication of a quantity of indicated technical features. Therefore, features defined with "first" and "second" may explicitly or implicitly include one or more such features. In the descriptions of embodiments, unless otherwise specified, "a plurality of" means two or more.

It should be noted that in the description of the embodiments of the present disclosure, "/" means "or" unless otherwise specified. For example, A/B may represent A or B. In this specification, "and/or" merely describes an association relationship between associated objects and represents that three relationships may exist. For example, A and/or B may represent the following three cases: Only A exists, both A and B exist, and only B exists.

It should be understood that the technical solutions in the embodiments of the present disclosure may be applied to various communication systems, for example, a mobile communication system according to Long Term Evolution (LTE) in a 4th-generation mobile communication technology (4G) and a mobile communication system according to New Radio (NR) in a 5th-generation mobile communication technology (5G).

The technical solutions provided in the present disclosure may further be applied to a communication system in which a plurality of communication technologies are integrated (for example, a communication system in which the LTE and NR technologies are integrated), or to various future communication systems, for example, a 6G communication system and a 7G communication system. This is not limited in the embodiments of the present disclosure. The technical solutions in the embodiments of the present disclosure are applicable to different network architectures, including but not limited to a relay network architecture, a dual-link architecture, and a vehicle-to-everything architecture.

For a better understanding of the technical solutions in the present disclosure, the following describes in detail the embodiments of the present disclosure with reference to the accompanying drawings.

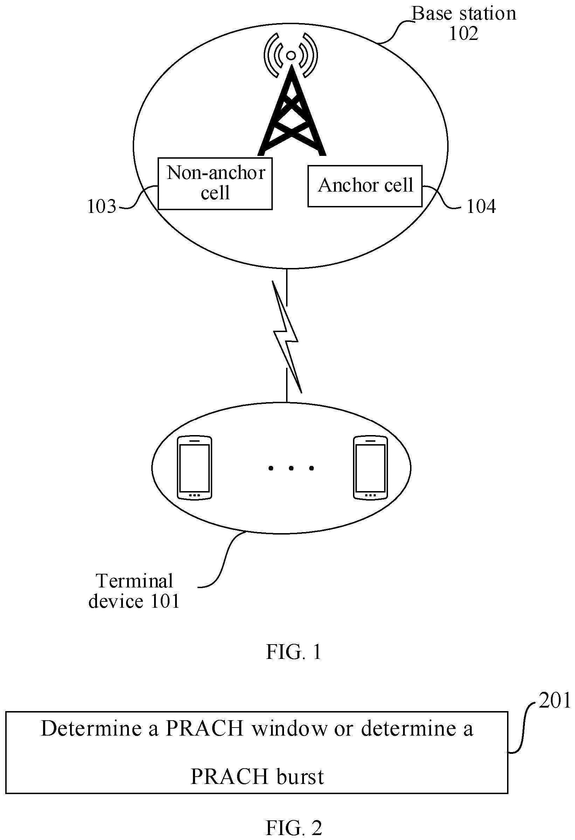

FIG. 1 is a schematic diagram of an application scenario according to the present disclosure. As shown in FIG. 1, the technical solutions provided in the embodiments of the present disclosure may be applied to a communication system that includes a terminal device 101 and a base station 102. The terminal device 101 may be connected to the base station 102 through the foregoing technologies such as 4G and 5G.

The terminal device 101 involved in the embodiments of the present disclosure may also be referred to as UE. For example, the terminal device 101 may be a mobile phone, a tablet computer, a desktop computer, a notebook computer, an all-in-one machine, a vehicle-mounted terminal, a virtual reality (VR) terminal device, an augmented reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, a wearable device, a terminal device in a future mobile communication network, a terminal device in a future evolved public land mobile network (PLMN), or the like. The terminal device 101 may alternatively be an apparatus having a transceiving function, such as a chip system. The chip system may include a chip, and may further include another discrete component. The terminal device 101 may alternatively include a relay. Alternatively, a device capable of performing data communication with the base station 102 may be regarded as the terminal device 101.

The base station 102 involved in the embodiments of the present disclosure may be a device that provides a wireless communication function for the terminal device 101, and may also be referred to as a radio access network (RAN) device, an access network element, or the like. The base station 102 may support at least one wireless communication technology, such as LTE and NR. For example, the base station 102 may include but is not limited to a generation NodeB (gNB) in 5G, an evolved NodeB (eNB), a radio network controller (RNC), a NodeB (NB), a base station controller (BSC), a base transceiver station (BTS), a home base station (such as a home eNB or a home NB), a baseband unit (BBU), a transmitting and receiving point (TRP), a transmitting point (TP), and a mobile switching center. The base station 102 may alternatively be a radio controller, a centralized unit (CU), and/or a distributed unit (DU) in a cloud RAN (CRAN) scenario.

In some embodiments of the present disclosure, the base station 102 may alternatively be an apparatus having a function of providing wireless communication for the terminal device 101, such as a chip system. For example, the chip system may include a chip, and may further include another discrete component.

In some embodiments of the present disclosure, the base station 102 may further communicate with an Internet Protocol (IP) network, such as the Internet, a private IP network, or another data network.

To facilitate understanding of the technical solutions provided in the embodiments of the present disclosure, technical terms involved in the embodiments of the present disclosure are briefly described below.

It may be understood that the base station 102 may be configured with a plurality of cells. The cell may act as a CE, namely a logical node, in a mobile communication system and may provide wireless communication services for the terminal device 101. For example, when the terminal device 101 accesses a network, uplink time-frequency synchronization may be performed by searching for a cell. A random access procedure (RAP) is initiated on the cell to perform uplink time-frequency synchronization and signaling interaction in a process of accessing the network such that corresponding communication service data may be transmitted.

It should be understood that the cell may be a carrier.

It should be noted that frequency resources of frequency bands such as 1 GHz, 2 GHz, 4 GHz, 6 GHz, and 26 GHz may be used in a mobile communication network, for example, a 5G network. Only some of the frequency bands may be used if a network load is low such that cells or carriers corresponding to frequency bands such as 4 GHz, 6 GHz, and 26 GHz may be deactivated if possible and activated as needed, to achieve NES. That is, when the network load is low, some cells or carriers do not need to carry data and may be in a deactivated state. When the network load is high, these cells or carriers in the deactivated state are activated to support data load balancing.

Non-anchor cell 103: The foregoing cell or carrier that is activated on demand may be referred to as a non-anchor cell or a non-anchor carrier, a second-type cell or a second-type carrier, or a secondary cell (SCell), a secondary carrier, or a secondary carrier component (SCC). It should be noted that the non-anchor cell 103 may support access and mobility of the terminal device 101 by sending a periodic reference signal.

Anchor cell 104: Correspondingly, a cell or carrier that is not deactivated may be referred to as an anchor cell or an anchor carrier, a first-type cell or a first-type carrier, or a primary cell (PCell), a primary carrier, or a primary carrier component (PCC).

It should be understood that in the embodiments of the present disclosure, the anchor cell 104 may be represented by a serving cell, source cell, or current cell, and the non-anchor cell 103 may be represented by a non-serving cell, target cell, or candidate cell. Because for the given terminal device 101, the serving cell, source cell, or current cell before the terminal device 101 performs switching may be the foregoing cell or carrier that is not deactivated, the anchor cell 104 may be the serving cell, source cell, or current cell. While the non-serving cell, target cell, or candidate cell to which the terminal device switches may be the foregoing cell or carrier that is activated on demand, the non-anchor cell 103 may be the non-serving cell, target cell, or candidate cell.

It should be noted that the anchor cell 104 and the non-anchor cell 103 may belong to the same base station 102 or different base stations 102. When the anchor cell 104 and the non-anchor cell 103 belong to the same base station 102, the anchor cell 104 may be referred to as a PCell or PCC, and the non-anchor cell 103 may be referred to as an SCell or SCC. When the anchor cell 104 and the non-anchor cell 103 belong to different base stations 102, the anchor cell 104 may be referred to as a PCell or PCC, and the non-anchor cell 103 may also be referred to as a PCell or PCC.

Referring to FIG. 1 again, the base station 102 may be configured with both the non-anchor cell 103 and the anchor cell 104. When the network load is low, the terminal device 101 may transmit service data on the anchor cell 104, and the base station 102 may deactivate the non-anchor cell 103 to achieve NES. When the network load is high, the non-anchor cell 103 may be activated. That is, the terminal device 101 may access the network through the non-anchor cell 103 to support data load balancing.

It should be understood that the anchor cell 104 and the non-anchor cell 103 may alternatively be configured on different base stations 102.

As described above, the non-anchor cell 103 is activated as needed. For example, when the network load is high, the non-anchor cell 103 needs to be activated. That is, the non-anchor cell 103 enters a state of sending and receiving random access channel (RACH) resources to complete random access such that part of the network load may be shared. However, different activation times of the non-anchor cell 103 and different corresponding behaviors of the terminal device 101 may result in a failure to achieve NES or data load balancing.

For example, the time when the non-anchor cell 103 is activated may be before the terminal device 101 initiates random access, and the corresponding behavior of the terminal device 101 may be to initiate random access on the non-anchor cell 103 and use a PRACH resource on the non-anchor cell 103. For another example, the time when the non-anchor cell 103 is activated may be after the terminal device 101 initiates random access, and the terminal device 101 may immediately switch to the non-anchor cell 103 after initiating random access on the anchor cell 104. However, regardless of whether the non-anchor cell 103 is activated before or after the terminal device 101 initiates random access, the time when the non-anchor cell 103 is activated needs to be close to or synchronized with a time when the terminal device 101 initiates random access, to avoid that the non-anchor cell 103 is activated for a long time due to waiting for a RACH resource sent by the terminal device 101 to affect NES, or avoid a problem of random access delay caused by the terminal device 101 waiting for random access to the non-anchor cell 103 for a long time.

Therefore, the time when the non-anchor cell 103 is activated and the corresponding behavior of the terminal device 101 are problems to be resolved urgently.

In view of the foregoing problems, the embodiments of the present disclosure provide a random access method. The terminal device 101 may camp on the anchor cell 104 and determine, through a relevant parameter sent by the anchor cell 104, the time for the terminal device 101 to initiate random access, a PRACH resource configuration that may be used on the non-anchor cell 103, and a PRACH resource associated with the time when the non-anchor cell 103 is activated in the PRACH resource configuration that may be used on the non-anchor cell 103. In this way, NES and load balancing may be achieved.

The technical solutions provided in the embodiments of the present disclosure are described in detail below.

### Embodiment 1

FIG. 2 is a flowchart of a random access method according to an embodiment of the present disclosure. As shown in FIG. 2, the random access method may be applied to the terminal device 101 in the communication system shown in FIG. 1. The method includes:

In step 201, the terminal device 101 determines a PRACH window or determines a PRACH burst.

Optionally, that the terminal device 101 determines the PRACH window or determines the PRACH burst may be that the terminal device 101 determines that a PRACH is valid.

Optionally, that the terminal device 101 determines that the PRACH is valid may be that the terminal device 101 determines that a PRACH resource is valid. Alternatively, that the terminal device 101 determines that the PRACH is valid may be that the terminal device 101 determines that a PRACH resource is usable. For example, the terminal device 101 may determine that a PRACH resource used to initiate random access is valid. Initiating random access by the terminal device 101 may be sending a preamble on the PRACH resource.

Optionally, the PRACH resource may include at least one of a time domain resource, frequency domain resource, code domain resource, and spatial domain resource for random access.

Optionally, the terminal device 101 may send the preamble on the PRACH resource determined to be valid.

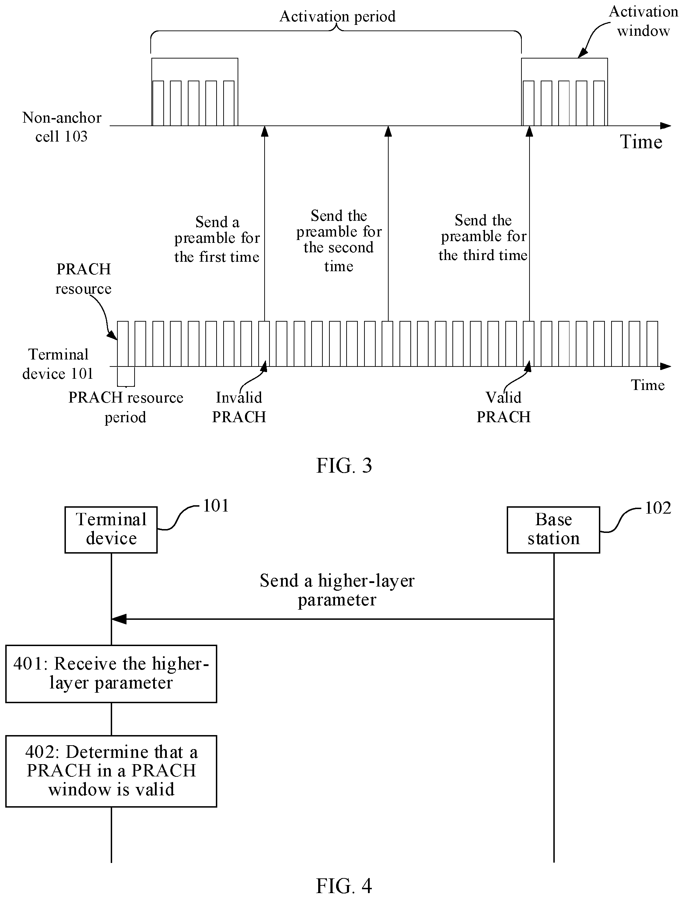

It should be understood that the PRACH resource is a periodic resource. Refer to FIG. 3. FIG. 3 is a schematic diagram of interaction between the terminal device 101 and the non-anchor cell 103 according to an embodiment of the present disclosure. The terminal device 101 may send the preamble on any PRACH resource to initiate a RAP. Correspondingly, the base station 102 may periodically detect or receive the preamble in the PRACH to determine that the terminal device 101 initiates a random access request.

For example, the terminal device 101 may obtain a configuration of the PRACH resource during downlink time-frequency synchronization with the base station 102. For example, the terminal device 101 may obtain, through a synchronization signal/physical broadcast channel (SS/PBCH) block (SSB), a master information block (MIB) and a SIB sent by the base station 102. The terminal device 101 may obtain the configuration of the PRACH resource from the SIB, further to obtain a PRACH period.

Optionally, the non-anchor cell 103 may be periodically activated.

For example, the base station 102 may periodically activate the non-anchor cell 103.

Optionally, the PRACH may be detected in an activation window after the non-anchor cell 103 is activated. Alternatively, the preamble in the PRACH may be received in an activation window after the non-anchor cell 103 is activated.

Optionally, the base station 102 detects the PRACH on the non-anchor cell 103 in the activation window.

It may be understood that the non-anchor cell 103 is periodically activated such that the non-anchor cell 103 may periodically enter a state of receiving or sending the PRACH resource. In this way, the base station 102 may periodically detect or receive the preamble in the PRACH to determine that the terminal device 101 initiates the random access request.

It should be understood that the non-anchor cell 103 may be configured to be periodically activated or deactivated to achieve NES. A reduction in periodic activity of the non-anchor cell 103 is an important factor in NES. To reduce the periodic activity of the non-anchor cell 103 to detect or receive the PRACH resource, an activation period of the non-anchor cell 103 may be directly increased, thereby reducing the periodic activity of the non-anchor cell 103. However, this may increase a random access delay of the terminal device 101. For example, referring to FIG. 3 again, the terminal device 101 sends the preamble for the first time on a first PRACH resource. The PRACH resource used to send the preamble for the first time may fall in an interval between two adjacent activation windows of the non-anchor cell 103. Consequently, the non-anchor cell 103 may not detect or receive the preamble sent by the terminal device 101, and the base station 102 does not send a RAR because it does not receive the preamble. As a result, random access initiated by the terminal device 101 fails, and the terminal device 101 needs to send the preamble for the second time. Similarly, a PRACH resource used by the terminal device 101 to send the preamble for the second time also falls in the interval between the two adjacent activation windows of the non-anchor cell 103. Random access may not be completed until a PRACH resource used by the terminal device 101 to send the preamble for the third time falls in the activation window of the non-anchor cell 103. Further, the base station 102 may determine that the terminal device 101 initiates the random access request. Therefore, increasing the activation period of the non-anchor cell 103 may result in a need for the terminal device 101 to send the PRACH resource for a plurality of times to obtain an access opportunity.

In view of the foregoing problem, in the foregoing random access method provided in the embodiments of the present disclosure, the terminal device 101 determines that the PRACH is valid. For example, in FIG. 3, the terminal device 101 may determine that the PRACH resources used to send the preamble for the first time and the preamble for the second time are invalid, and the PRACH resource used to send the preamble for the third time is valid. This may ensure that a time when the terminal device 101 sends the preamble is synchronized with a time when the non-anchor cell 103 is activated. In this way, the preamble sent by the terminal device 101 may be detected or received after the non-anchor cell 103 is activated. This may reduce the activity of the non-anchor cell 103 to periodically detect the PRACH and avoid an excessive random access delay.

FIG. 4 is a flowchart of a random access method according to another embodiment of the present disclosure. As shown in FIG. 4, that the terminal device 101 determines the PRACH window in step 201 may include:

In step 402, the terminal device 101 determines that a PRACH in the PRACH window is valid.

Optionally, that the terminal device 101 determines that the PRACH in the PRACH window is valid may be that the terminal device 101 determines that a PRACH resource in the PRACH window is valid. For example, the terminal device 101 may determine that a PRACH resource used to initiate random access in the PRACH window is valid.

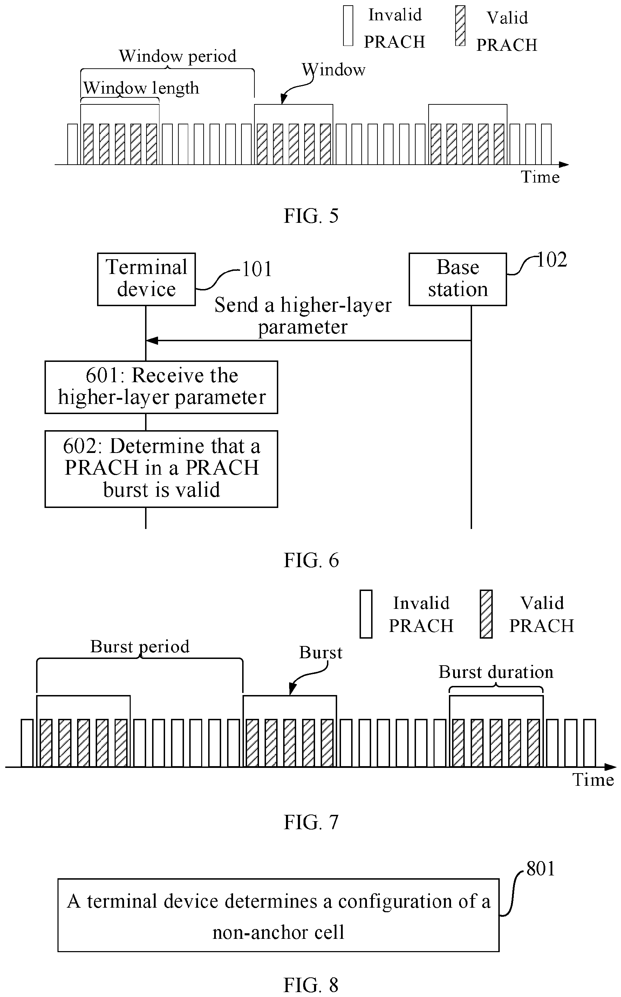

For example, reference may be made to FIG. 5 for how the terminal device 101 determines that the PRACH in the PRACH window is valid. FIG. 5 is a schematic diagram of a valid PRACH in a PRACH window according to an embodiment of the present disclosure. As shown in FIG. 5, the terminal device 101 determines that the PRACH resource in the PRACH window is valid and a PRACH resource outside the PRACH window is invalid.

For example, that the terminal device 101 determines that the PRACH in the PRACH window is valid may alternatively be that the terminal device 101 determines that the PRACH resource in the PRACH window is usable.

Optionally, that the terminal device 101 determines that the PRACH in the PRACH window is valid may alternatively be that the terminal device 101 determines that the PRACH resource in the PRACH window is used to initiate random access.

Optionally, the terminal device 101 may send the preamble on the PRACH resource in the PRACH window.

Optionally, that the terminal device 101 determines that the PRACH in the PRACH window is valid in step 402 may include:

In step 402-1, the terminal device 101 determines a period and/or length of the PRACH window.

It may be understood that determining the period and/or length of the PRACH window by the terminal device 101 may include determining the period of the PRACH window by the terminal device 101, determining the length of the PRACH window by the terminal device 101, and determining the period and length of the PRACH window by the terminal device 101.

Optionally, that the terminal device 101 determines that the PRACH in the PRACH window is valid may be that the terminal device 101 determines that a PRACH resource in the period of the PRACH window is valid. Alternatively, that the terminal device 101 determines that the PRACH in the PRACH window is valid may be that the terminal device 101 determines that a PRACH resource within the length of the PRACH window is valid.

Optionally, after the terminal device 101 determines the period and/or length of the PRACH window in step 402-1, the following step may be included:

In step 402-2, the terminal device 101 determines, according to the period and/or length of the PRACH window, that the PRACH resource in the PRACH window is valid. For example, the terminal device 101 may determine the PRACH resource in the period of the PRACH window according to the period of the PRACH window, and then the terminal device 101 may determine that the PRACH resource is valid. For another example, the terminal device 101 may determine the PRACH resource within the length of the PRACH window according to the length of the PRACH window, and then the terminal device 101 may determine that the PRACH resource is valid. For another example, the terminal device 101 may determine a PRACH resource in each PRACH window according to the period and length of the PRACH window, and then the terminal device 101 may determine that the PRACH resource is valid.

Optionally, the period of the PRACH window may be associated with the activation period of the non-anchor cell 103. For example, the period of the window may be the same as or synchronized with the activation period of the non-anchor cell 103.

Optionally, the length of the PRACH window may be associated with a length of the activation window of the non-anchor cell 103. For example, the length of the PRACH window may be less than or equal to the length of the activation window.

Optionally, the period of the PRACH window may be greater than a period of a PRACH resource.

In the foregoing random access method provided in the embodiments of the present disclosure, a period of detecting or receiving a PRACH by the non-anchor cell 103, the period of the PRACH window, and a period of PRACH resources in the PRACH window may be associated by determining that the PRACH in the PRACH window is valid. This ensures that the preamble sent by the terminal device 101 on the PRACH resource in the PRACH window may be detected or received by the non-anchor cell 103. In this way, the terminal device 101 does not need to send the preamble for a plurality of times. In addition, the non-anchor cell 103 does not need to reduce the period of detecting or receiving a PRACH.

Optionally, the non-anchor cell 103 may be in a sleep state outside the window. Alternatively, the non-anchor cell 103 may be in a deactivated state outside the window.

It may be understood that the period of the PRACH window may usually be set to be relatively large, and a PRACH period in the PRACH window may be set to be relatively small. NES may be achieved by making the non-anchor cell 103 enter the sleep state outside the PRACH window.

Optionally, that the terminal device 101 determines the period and/or length of the PRACH window in step 402-1 includes:

The terminal device 101 determines the period and/or length of the PRACH window according to a higher-layer parameter.

Optionally, the period and length of the PRACH window may be given through the higher-layer parameter. For example, referring to FIG. 4, before the terminal device 101 determines that the PRACH in the PRACH window is valid in step 402, the following step may be included:

In step 401, the terminal device 101 receives the higher-layer parameter.

Optionally, the higher-layer parameter may be sent by the base station 102.

For example, the terminal device 101 may camp on the anchor cell 104. The base station 102 sends the higher-layer parameter on the anchor cell 104.

In the foregoing random access method provided in the embodiments of the present disclosure, the terminal device 101 determines the period and/or length of the PRACH window according to the higher-layer parameter. Then, the terminal device 101 may determine that the PRACH resource in the PRACH window is valid.

FIG. 6 is a flowchart of a random access method according to an embodiment of the present disclosure. As shown in FIG. 6, that the terminal device 101 determines the PRACH burst in step 201 may include:

In step 602, the terminal device 101 determines that a PRACH in the PRACH burst is valid.

Optionally, that the terminal device 101 determines that the PRACH in the PRACH burst is valid may be that the terminal device 101 determines that a PRACH resource in the PRACH burst is valid. For example, the terminal device 101 may determine that a PRACH resource used to initiate random access in the PRACH burst is valid.

Optionally, the PRACH burst may be periodic. Referring to FIG. 7, that the terminal device 101 determines that the PRACH in the PRACH burst is valid may be that the terminal device 101 determines that the PRACH resource in the PRACH burst is valid and a PRACH resource outside the PRACH burst is invalid.

For example, that the terminal device 101 determines that the PRACH in the PRACH burst is valid may alternatively be that the terminal device 101 determines that the PRACH resource in the PRACH burst is usable.

Optionally, that the terminal device 101 determines that the PRACH in the PRACH burst is valid may alternatively be that the terminal device 101 determines that the PRACH resource in the PRACH burst is used to initiate random access.

Optionally, the terminal device 101 may send the preamble on the PRACH resource in the PRACH burst.

Optionally, that the terminal device 101 determines that the PRACH in the PRACH burst is valid in step 602 may include:

In step 602-1, the terminal device 101 determines a period and/or duration of the PRACH burst.

It may be understood that determining the period and/or duration of the PRACH burst by the terminal device 101 may include determining the period of the PRACH burst by the terminal device 101, determining the duration of the PRACH burst by the terminal device 101, and determining the period and duration of the PRACH burst by the terminal device 101.

Optionally, that the terminal device 101 determines that the PRACH in the PRACH burst is valid may be that the terminal device 101 determines that a PRACH resource in the period of the PRACH burst is valid. That the terminal device 101 determines that the PRACH in the PRACH burst is valid may be that the terminal device 101 determines that a PRACH resource in the duration of the PRACH burst is valid.

Optionally, after the terminal device 101 determines the period and/or duration of the PRACH burst in step 602-1, the following step may be included:

In step 602-2, the terminal device 101 determines, according to the period and/or duration of the PRACH burst, that the PRACH resource in the PRACH burst is valid. For example, the terminal device 101 may determine the PRACH resource in the period of the PRACH burst according to the period of the PRACH burst, and then the terminal device 101 may determine that the PRACH resource is valid. For another example, the terminal device 101 may determine the PRACH resource in the duration of the PRACH burst according to the duration of the PRACH burst, and then the terminal device 101 may determine that the PRACH resource is valid. For another example, the terminal device 101 may determine, according to the period and duration of the PRACH burst, that a PRACH resource in each PRACH burst is valid.

It may be understood that PRACH resources are periodic resources. As shown in FIG. 7, the PRACH burst may overlap some PRACH resources in time domain. Thus, that the terminal device 101 determines the period of the PRACH burst may be determining a PRACH period in the period of the PRACH burst.

Optionally, the terminal device 101 determines the PRACH period in the period of the PRACH burst such that the terminal device 101 may determine that the PRACH resource in the PRACH burst is valid.

For example, referring to FIG. 7 again, the terminal device 101 may determine the PRACH resource in the duration of the PRACH burst by determining the PRACH period in the period of the PRACH burst.

Optionally, the period of the PRACH burst is greater than the PRACH period in the period of the PRACH burst.

Optionally, the period of the PRACH burst may be associated with the activation period of the non-anchor cell 103. For example, the period of the PRACH burst may be the same as or synchronized with the activation period of the non-anchor cell 103.

Optionally, the duration of the PRACH burst may be associated with a length of the activation window of the non-anchor cell 103. For example, the duration of the PRACH burst may be less than or equal to the length of the activation window.

For example, in time domain, the duration of the PRACH burst may fall within the activation window of the non-anchor cell 103.

It should be noted that as shown in the embodiments of FIG. 2 to FIG. 4, periodically activating the non-anchor cell 103 may cause the non-anchor cell 103 to periodically enter the state of receiving or sending the PRACH resource, and further determine that the terminal device 101 initiates the random access request. To reduce the periodic activity of the non-anchor cell 103 to detect or receive the PRACH resource, the activation period of the non-anchor cell 103 may be directly increased, thereby reducing the periodic activity of the non-anchor cell 103. However, this increases the random access delay of the terminal device 101.

In the foregoing random access method provided in the embodiments of the present disclosure, a period of detecting or receiving a PRACH by the non-anchor cell 103, a period of the PRACH burst, and a period of PRACH resources in the PRACH burst may be associated by determining that the PRACH in the PRACH burst is valid. This ensures that the preamble sent by the terminal device 101 on the PRACH resource in the PRACH burst may be detected or received by the non-anchor cell 103. In this way, the terminal device 101 does not need to send the preamble for a plurality of times. In addition, the non-anchor cell 103 does not need to reduce the period of detecting or receiving a PRACH.

Optionally, the non-anchor cell 103 may be in a sleep state outside the PRACH burst. Alternatively, the non-anchor cell 103 may be in a deactivated state outside the PRACH burst.

It may be understood that the period of the PRACH burst may usually be set to be relatively large, and a PRACH period in the PRACH burst may be set to be relatively small. NES may be achieved by making the non-anchor cell 103 enter the sleep state outside the PRACH burst.

Optionally, that the terminal device 101 determines the period and/or duration of the PRACH burst in step 602-1 may include:

The terminal device 101 determines the period and/or duration of the PRACH burst according to a higher-layer parameter.

Optionally, the period and duration of the PRACH burst may be given through the higher-layer parameter. For example, referring to FIG. 6, before the terminal device 101 determines that the PRACH in the PRACH burst is valid in step 602, the following step may be included:

In step 601, the terminal device 101 receives the higher-layer parameter.

Optionally, the higher-layer parameter may be sent by the base station 102.

For example, the terminal device 101 may camp on the anchor cell 104. The base station 102 sends the higher-layer parameter on the anchor cell 104.

In the foregoing random access method provided in the embodiments of the present disclosure, the terminal device 101 determines the period and/or duration of the PRACH burst according to the higher-layer parameter. Then, the terminal device 101 may determine that the PRACH resource in the PRACH burst is valid.

### Embodiment 2

It may be understood that in the foregoing random access method provided in the embodiments of the present disclosure, before it is determined that a PRACH resource used to initiate random access on the non-anchor cell 103 is valid, a resource related to random access on the non-anchor cell 103 needs to be configured. The terminal device 101 may configure the resource related to random access on the non-anchor cell 103 through a random access method shown in FIG. 8, to achieve NES and load balancing.

FIG. 8 is a flowchart of a random access method according to another embodiment of the present disclosure. As shown in FIG. 8, the random access method may be applied to the terminal device 101 in the communication system shown in FIG. 1. The method includes:

In step 801, the terminal device 101 determines a configuration of the non-anchor cell 103.

Optionally, the configuration of the non-anchor cell 103 may include at least one of a configuration of a PRACH, a configuration of a RAR search space, a configuration of an initial DL BWP, a configuration of an initial UL BWP, and a configuration of SDT.

Optionally, that the terminal device 101 determines the configuration of the non-anchor cell 103 may include:
In step 801-1, the terminal device 101 determines the configuration of the non-anchor cell 103 according to a parameter on the anchor cell 104.

Optionally, the terminal device 101 may determine the configuration of the PRACH on the non-anchor cell 103 according to the parameter on the anchor cell 104.

In the foregoing random access method provided in the embodiments of the present disclosure, the configuration of the PRACH on the non-anchor cell 103 is determined according to the parameter on the anchor cell 104 such that the terminal device 101 may obtain the configuration of the PRACH on the non-anchor cell 103 and use PRACH resources only by obtaining SIB 1 on the anchor cell 104.

It should be noted that SIB 1 may refer to remaining minimum system information (RMSI) in a Rel-15 NR protocol. The RMSI includes main system information other than a MIB.

Optionally, the terminal device 101 may determine the configuration of the RAR search space on the non-anchor cell 103 according to the parameter on the anchor cell 104.

In the foregoing random access method provided in the embodiments of the present disclosure, the configuration of the RAR search space on the non-anchor cell 103 is determined according to the parameter on the anchor cell 104 such that the terminal device 101 may obtain the configuration of the RAR search space on the non-anchor cell 103 and use the RAR search space only by obtaining SIB 1 on the anchor cell 104.

Optionally, the configuration of the RAR search space includes a CORESET associated with the RAR search space.

In the embodiments of the present disclosure, through the foregoing random access method, the terminal device 101 may further obtain the CORESET associated with the RAR search space, namely a CORESET of a PDCCH during a random access prorocedure.

Optionally, the terminal device 101 may determine the configuration of the initial DL BWP and/or initial UL BWP on the non-anchor cell 103 according to the parameter on the anchor cell 104.

In the foregoing random access method provided in the embodiments of the present disclosure, the configuration of the initial DL BWP and/or initial UL BWP on the non-anchor cell 103 is determined according to the parameter on the anchor cell 104 such that the terminal device 101 may obtain the configuration of the initial DL BWP and/or initial UL BWP on the non-anchor cell 103 and use resources in the initial DL BWP and/or initial UL BWP only by obtaining SIB1 on the anchor cell 104.

Optionally, the terminal device 101 may determine the configuration of SDT on the non-anchor cell 103 according to the parameter on the anchor cell 104.

In the foregoing random access method provided in the embodiments of the present disclosure, the configuration of SDT on the non-anchor cell 103 is determined according to the parameter on the anchor cell 104 such that the terminal device 101 may obtain the configuration of the SDT on the non-anchor cell 103 and use SDT resources only by obtaining SIB 1 on the anchor cell 104.

### Embodiment 3

It may be understood that through the random access method shown in any one of the embodiments of FIG. 2 to 8, the terminal device 101 may initiate a RAP on the non-anchor cell 103, to achieve NES and load balancing. For example, the terminal device 101 may initiate a RAP on the non-anchor cell 103. Then, starting from random access initiated by the terminal device 101, the non-anchor cell 103 may share loads on the anchor cell 104, and a handover (HO) procedure between different cells is eliminated.

Optionally, a network may indicate, according to load conditions of the non-anchor cell 103 and the anchor cell 104, the terminal device 101 to initiate a RAP on the non-anchor cell 103. This may be applicable to mobile terminated (MT) services, that is, the network sends data to the terminal device 101.

Optionally, the terminal device 101 may autonomously initiate the RAP on the non-anchor cell 103. This may be applicable to mobile originated (MO) services, that is, the terminal device 101 sends data to the network.

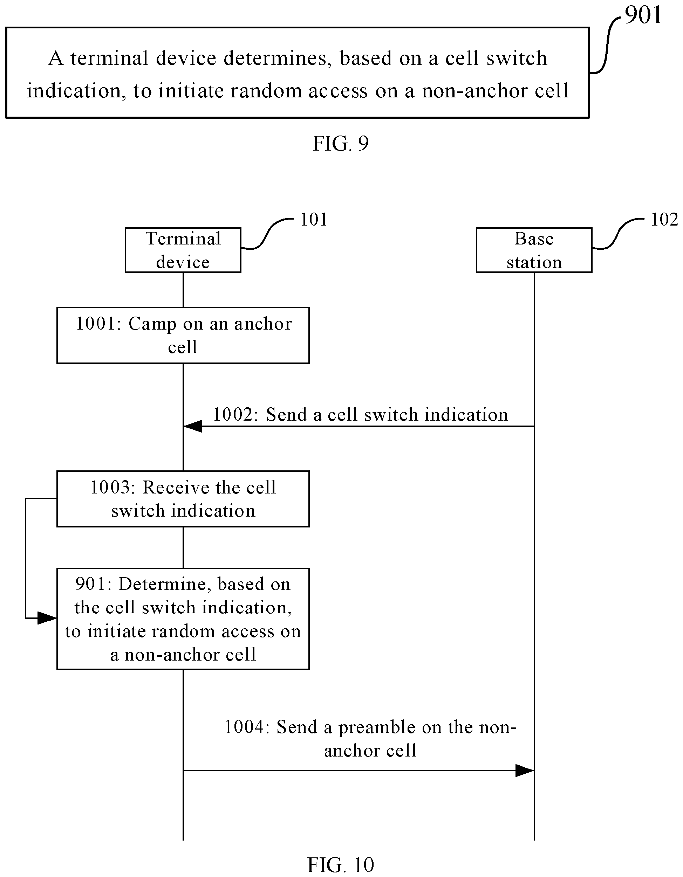

It may be understood that according to load requirements of the network, the terminal device 101 needs to determine whether to perform random access on the non-anchor cell 103 or the anchor cell 104 for different requirements. Therefore, a random access method shown in FIG. 9 may be used to determine whether to perform random access on the non-anchor cell 103 or the anchor cell 104.

FIG. 9 is a flowchart of a random access method according to another embodiment of the present disclosure. As shown in FIG. 9, the random access method may be applied to the terminal device 101 in the communication system shown in FIG. 1. The method includes:

In step 901, the terminal device 101 determines, based on a cell switch indication, to initiate random access on the non-anchor cell 103.

In the embodiments of the present disclosure, the cell may be a carrier. The cell switch indication may be a carrier switch indication.

Optionally, the method shown in FIG. 9 further includes:

In step 902, the terminal device 101 determines, based on the cell switch indication, to initiate random access on the anchor cell 104.

It should be understood that because uplink coverage is often more suitable for the non-anchor cell 103, the terminal device 101 may use uplink transmission on the non-anchor cell 103. In this case, the cell switch indication may also be a UL switch indication. The UL switch indication may be used in a connected state.

For example, the UL switch indication may also be an indication to switch between a non-supplemental UL (non-SUL) carrier and a supplemental UL (SUL) carrier, namely a UL/SUL indicator or a non-SUL/SUL indicator.

Optionally, the cell switch indication is used to indicate the terminal device 101 to initiate random access on the non-anchor cell 103.

In the foregoing random access method provided in the embodiments of the present disclosure, the terminal device 101 may determine, based on the cell switch indication sent by the network, to initiate random access on the non-anchor cell 103.

Optionally, the cell switch indication may be sent by a network-side device. The network-side device may be the base station 102, for example, a gNB, an eNB, or an NB in 5G. Alternatively, the network-side device may be a core network element, for example, an evolved packet core (EPC) or a 5G core network. The base station 102 may determine, according to the load condition of the anchor cell 104 or the non-anchor cell 103, a channel condition of the terminal device 101, and the like, whether to make the terminal device 101 switch to the non-anchor cell 103 or the anchor cell 104.

For example, as shown in FIG. 10, before the terminal device 101 determines, based on the cell switch indication, to initiate random access on the non-anchor cell 103 in step 901, the method further includes:

In step 1001, the terminal device 101 camps on the anchor cell 104.

It may be understood that the terminal device 101 camps on the anchor cell 104 and may listen to control information on the anchor cell 104 to receive the cell switch indication.

In step 1002, the base station 102 sends the cell switch indication.

It may be understood that the base station 102 may send the cell switch indication on the anchor cell 104. Generally, the non-anchor cell 103 is activated in this case to achieve load sharing.

In step 1003, the terminal device 101 receives the cell switch indication. In the embodiments of the present disclosure, the cell may be a carrier.

Optionally, before the terminal device 101 determines, based on the cell switch indication, to initiate random access on the anchor cell 104 in step 902, the method further includes:

In step 1001-1, the terminal device 101 camps on the non-anchor cell 103.

It may be understood that the terminal device 101 camps on the non-anchor cell 103 and may listen to control information on the non-anchor cell 103 to receive the cell switch indication.

In step 1002-1, the base station 102 sends the cell switch indication.

It may be understood that the base station 102 may send the cell switch indication on the non-anchor cell 103.

In step 1003-1, the terminal device 101 receives the cell switch indication. In the embodiments of the present disclosure, the cell may be a carrier. Generally, the non-anchor cell 103 is deactivated in this case to achieve energy saving.

Optionally, the cell switch indication may be a carrier switch indication. The cell switch indication may also be a UL switch indication. The UL switch indication may be used in a connected state. The UL switch indication may also be an indication to switch between a non-SUL carrier and an SUL carrier, namely a UL/SUL indicator or a non-SUL/SUL indicator.

In the embodiments of the present disclosure, through the foregoing random access method, the network may control, through the cell switch indication, the terminal device 101 to initiate random access on the non-anchor cell 103 or the anchor cell 104.

Optionally, the cell switch indication may be carried by a paging PDCCH. In other words, the cell switch indication may be a bit in the paging PDCCH. In this way, few bits may be used to indicate the terminal device 101 to initiate random access on the non-anchor cell 103.

Optionally, the cell switch indication may be carried by a PDCCH specified by the terminal device (UE specific PDCCH). In other words, the cell switch indication may be a bit in the PDCCH specified by the terminal device. In this way, a scheduling PDCCH (namely the PDCCH specified by the terminal device) in the connected state may be used to indicate the terminal device 101 to initiate random access on the non-anchor cell 103, and few bits may also be used to indicate the terminal device 101 to initiate random access on the non-anchor cell 103.

Optionally, the cell switch indication may be carried by a paging message. In other words, the cell switch indication may be a field in the paging message. In this way, the network may adopt different policies for different terminal devices 101. Different policies may mean different manners of carrying signaling.

Optionally, the cell switch indication may be carried by a SIB. In other words, the cell switch indication may be a field in the SIB. In this way, the network may notify, through broadcasting, all terminal devices 101 camping on the anchor cell 104 to adopt a same policy. This setting mode is also applicable to MO services, that is, the terminal device 101 actively sends data to the network.

Optionally, the cell switch indication may be carried by a WUS. In this way, the network may indicate, through a wake-up method, the terminal device 101 to initiate random access on the non-anchor cell 103.

Optionally, the cell switch indication may be carried by a signal or channel corresponding to the WUS, or an indication in a signal or channel corresponding to the WUS. The indication in the signal or channel corresponding to the WUS may indicate that a group of terminal devices 101 corresponding to a paging occasion (PO) is paged, or a subgroup of terminal devices 101 is paged. In this way, the terminal device 101 may determine whether to initiate random access on the anchor cell 104 or the non-anchor cell 103 after being awakened.

It should be noted that the signal corresponding to the WUS may be a sequence. The channel corresponding to the WUS may be a physical channel, such as a PDCCH.

Optionally, the cell switch indication may be carried by a PEI. In this way, the network may indicate, through the PEI, the terminal device 101 to initiate random access on the non-anchor cell 103. The PEI may also be referred to as an advanced indication of paging.

Optionally, the cell switch indication may be carried by a signal or channel corresponding to the PEI, or an indication in a signal or channel corresponding to the PEI. The indication in the signal or channel corresponding to the PEI may indicate that a group of terminal devices 101 corresponding to a PO is paged, or a subgroup of terminal devices 101 is paged.

It should be noted that the signal corresponding to the PEI may be a sequence. The channel corresponding to the PEI may be a physical channel, such as a PDCCH.

Optionally, the PDCCH corresponding to the PEI may be a downlink control information format 2_7 (DCI format 2_7). In this way, the terminal device 101 may determine whether to initiate random access on the anchor cell 104 or the non-anchor cell 103 after being indicated through the PEI.

Optionally, that the terminal device 101 determines, based on the cell switch indication, to initiate random access on the non-anchor cell 103 in step 901 may include:

The terminal device 101 determines, based on the cell switch indication, to initiate random access on the non-anchor cell 103 when determining that one of the following conditions is satisfied: detecting a WUS, detecting a PEI, detecting a paging PDCCH, and detecting that a paging message contains an identifier of the terminal device. The identifier of the terminal device is an identifier assigned to the terminal device 101 through higher-layer signaling. In this way, the terminal device 101 may initiate random access on the non-anchor cell 103 when detecting that it is likely to be paged.

Optionally, detecting that the paging message contains the identifier of the terminal device may be that the terminal device 101 detects that the paging message contains the identifier corresponding to the terminal device 101.

Optionally, detecting the WUS may be detecting a signal or channel corresponding to the WUS, or detecting an indication in a signal or channel corresponding to the WUS. For example, an indication that a group of terminal devices 101 corresponding to a PO is paged is detected, or an indication that a subgroup of terminal devices 101 is paged is detected.

It should be noted that the signal corresponding to the WUS may be a sequence. The channel corresponding to the WUS may be a physical channel, such as a PDCCH.

Optionally, detecting the PEI may be detecting a signal or channel corresponding to the PEI, or detecting an indication in a signal or channel corresponding to the PEI. For example, an indication that a group of terminal devices 101 corresponding to a PO is paged or an indication that a subgroup of terminal devices 101 is paged is detected in the signal or channel corresponding to the PEI.

It should be noted that the signal corresponding to the PEI may be a sequence. The channel corresponding to the PEI may be a physical channel, such as a PDCCH.

Optionally, the PDCCH corresponding to the PEI may be a downlink control information format 2_7 (DCI format 2_7).

In step 1004, the terminal device 101 sends the preamble on the non-anchor cell 103.

It may be understood that initiating random access by the terminal device 101 may be sending the preamble. In the foregoing random access method provided in the embodiments of the present disclosure, after the network notifies the terminal device 101 that it is determined to initiate random access on the anchor cell 103, random access may be initiated by sending the preamble on the non-anchor cell 103.

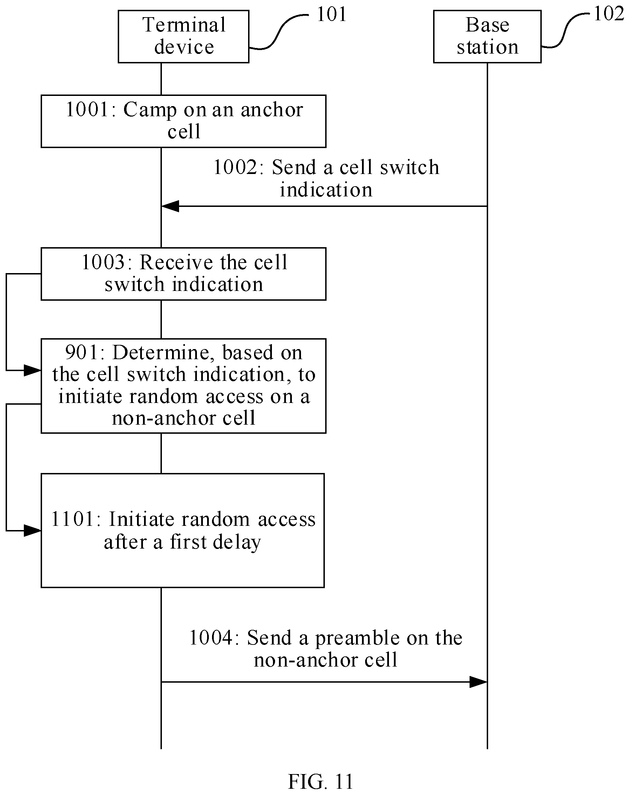

It should be understood that it takes a specific time for the non-anchor cell 103 to be activated when deactivated. Therefore, after determining to initiate random access on the non-anchor cell 103, the terminal device 101 may not immediately initiate random access, but wait for the non-anchor cell 103 to be activated after a specific delay to initiate random access, such as a flowchart of a random access method FIG. 11. This may avoid that the non-anchor cell 103 is incompletely activated when the terminal device 101 initiates random access such that the non-anchor cell 103 does not receive the random access request sent by the terminal device 101, further avoiding a random access delay.

Referring to FIG. 11, in the embodiment shown in FIG. 10, after the terminal device 101 determines, based on the cell switch indication, to initiate random access on the non-anchor cell 103 in step 901, the method further includes:

In step 1101, the terminal device 101 initiates random access after a first delay.

Optionally, a value of the first delay may be predefined.

Optionally, the value of the first delay may be greater than or equal to a switch time of the non-anchor cell 103.

Optionally, the switch time of the non-anchor cell 103 may be a time required for the non-anchor cell 103 to switch from the deactivated state to a completely activated state.

Optionally, the value of the first delay may alternatively be greater than or equal to a current switch time of the non-anchor cell 103. The current switch time of the non-anchor cell 103 may be a time required for the non-anchor cell 103 to switch from a current state to the completely activated state.

In the foregoing random access method provided in the embodiments of the present disclosure, the terminal device 101 initiates random access after the first delay. At this time, the non-anchor cell 103 is in the activated state such that a random access delay may be avoided.

It may be understood that if the non-anchor cell 103 has been activated, the first delay may be extremely small or zero. Therefore, the first delay may be similar to the cell switch indication, and the network may inform the terminal device 101 of the current first delay through an indication.

Optionally, the value of the first delay may be indicated by a bit in a paging PDCCH. In this way, few bits may be used to indicate the first delay.

Optionally, the value of the first delay may be indicated by a field in a paging message. In this way, the network may adopt different policies for different terminal devices 101.

Optionally, the value of the first delay may be indicated by a field in a SIB. In this way, the network may notify, through broadcasting, all terminal devices 101 camping on the anchor cell 104 to adopt a same policy.

It may be understood that step 1004 may be performed after step 1101.

It should be understood that because it takes a specific time for the terminal device 101 to finish receiving a paging message from the WUS or PEI, the terminal device 101 may initiate random access only after finishing receiving the paging message, that is, the terminal device 101 needs a delay to initiate random access.

Optionally, the value of the first delay may be greater than or equal to a minimum interval reported by the terminal device 101.

Optionally, the minimum interval reported by the terminal device 101 may be a time overhead of information reported by the terminal device 101.

It may be understood that the terminal device 101 may report information to a network-side device, such as the base station 102. For example, the minimum interval reported by the terminal device 101 may be a time consumed to receive the paging message reported by the terminal device 101. For another example, that the minimum interval reported by the terminal device 101 may be a time consumed for the WUS or PEI reported by the terminal device 101.

In the foregoing random access method provided in the embodiments of the present disclosure, the value of the first delay is greater than or equal to the minimum interval reported by the terminal device 101 such that when the terminal device 101 initiates random access after the first delay, the terminal device 101 has received the paging message. This may avoid that the terminal device 101 initiates random access before receiving the paging message.

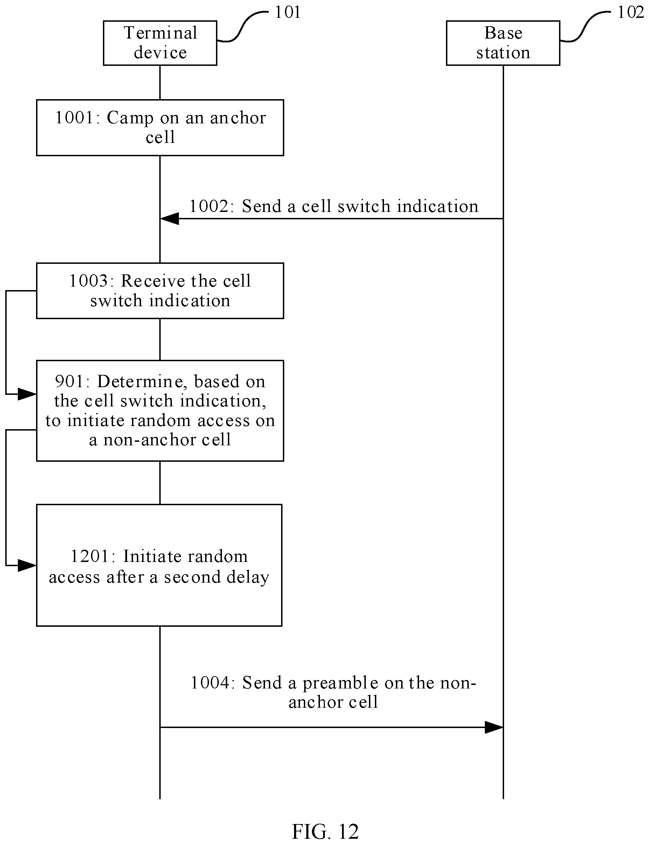

It may be understood that considering the time required for the terminal device 101 to finish receiving the paging message from the WUS or PEI, the terminal device 101 may initiate random access after finishing receiving the paging message. As shown in FIG. 12, in the embodiment shown in FIG. 10 of the present disclosure, after the terminal device 101 determines, based on the cell switch indication, to initiate random access on the non-anchor cell 103 in step 901, the method further includes:

In step 1201, the terminal device 101 initiates random access after a second delay.

Optionally, a value of the second delay may be predefined.

Optionally, the value of the second delay may be greater than or equal to a minimum interval reported by the terminal device 101.

Optionally, the minimum interval reported by the terminal device 101 may be a time consumed to receive paging information reported by the terminal device 101.

It may be understood that the minimum interval reported by the terminal device 101 is relevant to a capability related to the WUS or PEI and reported by the terminal device 101.

Optionally, the value of the second delay may be greater than or equal to a minimum interval currently reported by the terminal device 101.

In the foregoing random access method provided in the embodiments of the present disclosure, the terminal device 101 initiates random access after the second delay. At this time, the terminal device 101 has received the paging message. This may avoid that the terminal device 101 initiates random access before receiving the paging message.

It may be understood that different network conditions may result in different amounts of time consumed by the terminal device 101 to finish receiving the paging message. Therefore, the second delay may be similar to the cell switch indication, and the network may inform the terminal device 101 of the current second delay through an indication.

Optionally, the value of the second delay may be indicated by a bit in a paging PDCCH. In this way, few bits may be used to indicate the second delay.

Optionally, the value of the second delay may be indicated by a field in a paging message. In this way, the network may adopt different policies for different terminal devices 101.

Optionally, the value of the second delay may be indicated by a field in a SIB. In this way, the network may notify, through broadcasting, all terminal devices 101 camping on the anchor cell 104 to adopt a same policy.

It may be understood that step 1004 may be performed after step 1201.

Optionally, the value of the second delay may be greater than or equal to a switch time of the non-anchor cell 103.

In the foregoing random access method provided in the embodiments of the present disclosure, the value of the second delay is greater than or equal to the switch time of the non-anchor cell 103 such that when the terminal device 101 initiates random access after finishing receiving the paging message, the non-anchor cell 103 is already activated, further avoiding a random access delay.

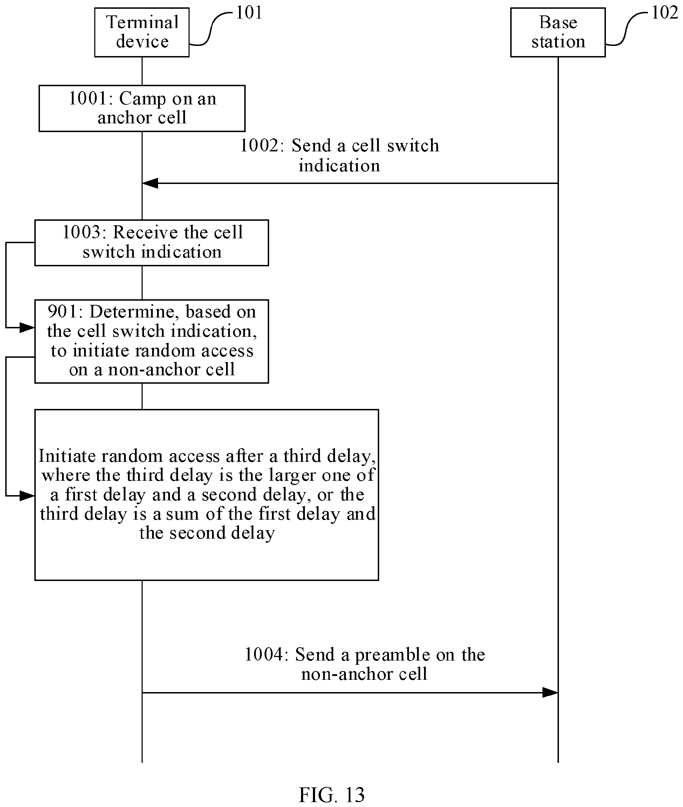

It should be understood that to achieve robustness, a final delay may be the larger one of the first delay and the second delay, or a sum of the first delay and the second delay. As shown in FIG. 13, in the embodiment shown in FIG. 10 of the present disclosure, after the terminal device 101 determines, based on the cell switch indication, to initiate random access on the non-anchor cell 103 in step 901, the method further includes:

In step 1301, the terminal device 101 initiates random access after a third delay. The third delay is the larger one of a first delay and a second delay, or the third delay is a sum of the first delay and the second delay.

Optionally, a value of the first delay may be predefined.

Optionally, the value of the first delay may be greater than or equal to a minimum interval reported by the terminal device 101.

Optionally, a switch time of the non-anchor cell 103 may be a time required for the non-anchor cell 103 to switch from the deactivated state to a completely activated state.

Optionally, a value of the second delay may be predefined.

Optionally, the value of the second delay may be greater than or equal to the switch time of the non-anchor cell 103.

Optionally, the minimum interval reported by the terminal device 101 may be a time overhead of information reported by the terminal device 101.

It may be understood that the terminal device 101 may report information to a network-side device, such as the base station 102. For example, the minimum interval reported by the terminal device 101 may be a time consumed to receive the paging message reported by the terminal device 101. For another example, the minimum interval reported by the terminal device 101 may be a time consumed for the WUS or PEI reported by the terminal device 101.

In the foregoing random access method provided in the embodiments of the present disclosure, the terminal device 101 initiates random access after the third delay. This may improve adaptability and stability of the network.

Optionally, the value of the first delay or the value of the second delay may be indicated by a bit in a paging PDCCH. In this way, few bits may be used to indicate the value of the first delay or the value of the second delay.

Optionally, the value of the first delay or the value of the second delay may be indicated by a field in a paging message. In this way, the network may adopt different policies for different terminal devices 101.

Optionally, the value of the first delay or the value of the second delay may be indicated by a field in a SIB. In this way, the network may notify, through broadcasting, all terminal devices 101 camping on the anchor cell 104 to adopt a same policy.

It may be understood that step 1004 may be performed after step 1301.

It should be understood that because the non-anchor cell 103 has limited coverage in a high frequency band the terminal device 101 is likely to fail to initiate random access on the non-anchor cell 103. In view of this, the terminal device 101 may initiate random access on the anchor cell 104 to ensure that the terminal device 101 accesses the network.

For example, after the terminal device 101 determines, based on the cell switch indication, to initiate random access on the non-anchor cell 103 in step 1001, the method further includes:
In step 1302, when the terminal device 101 receives the cell switch indication, the terminal device 101 starts a first timer.

In step 1303, when the first timer expires, the terminal device 101 determines to initiate random access on the anchor cell 104.

Optionally, when the first timer expires and the terminal device 101 does not access the network, the terminal device 101 determines to initiate random access on the anchor cell 104.

Optionally, that the first timer expires may mean that a time recorded by the first timer exceeds a first time threshold.

Optionally, the first time threshold may be predefined. For example, the first time threshold may be set by the terminal device 101.

Optionally, the first time threshold may be indicated by the network. For example, the first time threshold may be sent by the base station 102 to the terminal device 101.

For example, the first time threshold may be 2s, 3s, 4s, or the like. A specific value of the first time threshold is not limited in the embodiments of the present disclosure.

Optionally, when the terminal device 101 does not access the network beyond the first time threshold after initiating random access, the terminal device 101 determines to initiate random access on the anchor cell 104.

In the foregoing random access method provided in the embodiments of the present disclosure, considering that the non-anchor cell 103 has limited coverage in a high frequency band, random access is likely to fail. Therefore, when the first timer expires, the terminal device 101 is still unable to access the network on the non-anchor cell 103, and may roll back to initiating random access on the anchor cell 104 to ensure that the terminal device 101 accesses the network.

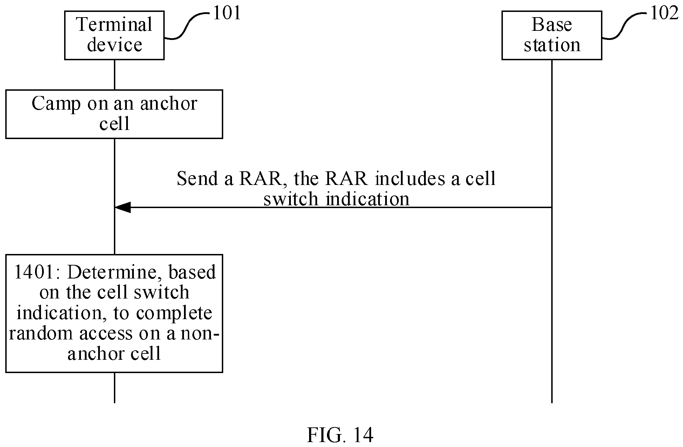

It should be noted that the embodiments shown in FIG. 8 to FIG. 13 are for the terminal device 101 that has not initiated random access, while for the terminal device 101 that has initiated random access also needs to initiate random access on the non-anchor cell 103 to share the loads on the anchor cell 104 and achieve load balancing. As shown in FIG. 14, another embodiment of the present disclosure provides a random access method, which may be applied to the terminal device 101 in the communication system shown in FIG. 1. The method includes:

In step 1401, the terminal device 101 determines, based on the cell switch indication, to complete random access on the non-anchor cell 103.

Optionally, the cell switch indication is used to indicate the terminal device 101 to complete random access on the non-anchor cell 103.

Optionally, the terminal device 101 may camp on the anchor cell 104. In this way, the terminal device 101 may listen to network information on the anchor cell 104.

Optionally, a network-side device may send a RAR. For example, the base station 102 may send the RAR.

Optionally, the RAR may include the cell switch indication.

Optionally, the terminal device 101 may receive the RAR.

In the foregoing random access method provided in the embodiments of the present disclosure, the network may indicate, through the RAR, the terminal device 101 to switch to the non-anchor cell 103 to complete the random access procedure.

Optionally, the cell switch indication may be a bit in a RAR PDCCH. In this way, few bits may be used to indicate the terminal device 101 to complete random access on the non-anchor cell 103.

Optionally, the cell switch indication may be a bit in a RAR MAC CE or a field in a RAR message. In this way, the cell switch indication may reuse the RAR MAC or RAR message.

Optionally, the cell switch indication may be a field in a message 4. In this way, the cell switch indication may reuse the message 4.

Optionally, the cell switch indication may be a field in a SIB. In this way, the network may notify, through broadcasting, all terminal devices 101 camping on the anchor cell 104 to adopt the same policy.

It may be understood that the terminal device 101 may determine to complete random access on the non-anchor cell 103 by using the method provided in the embodiment shown in FIG. 14. During the procedure of the terminal device 101 completing random access, the configuration of the non-anchor cell 103 may be determined through the method provided in the embodiment shown in FIG. 8. In this way, the PRACH configuration and the like of the non-anchor cell 103 may further be obtained. Then, a PRACH resource used to complete random access may be determined to be valid through the method provided in any one of the embodiments shown in FIG. 2 to FIG. 6. In this way, NES and load balancing may further be achieved.

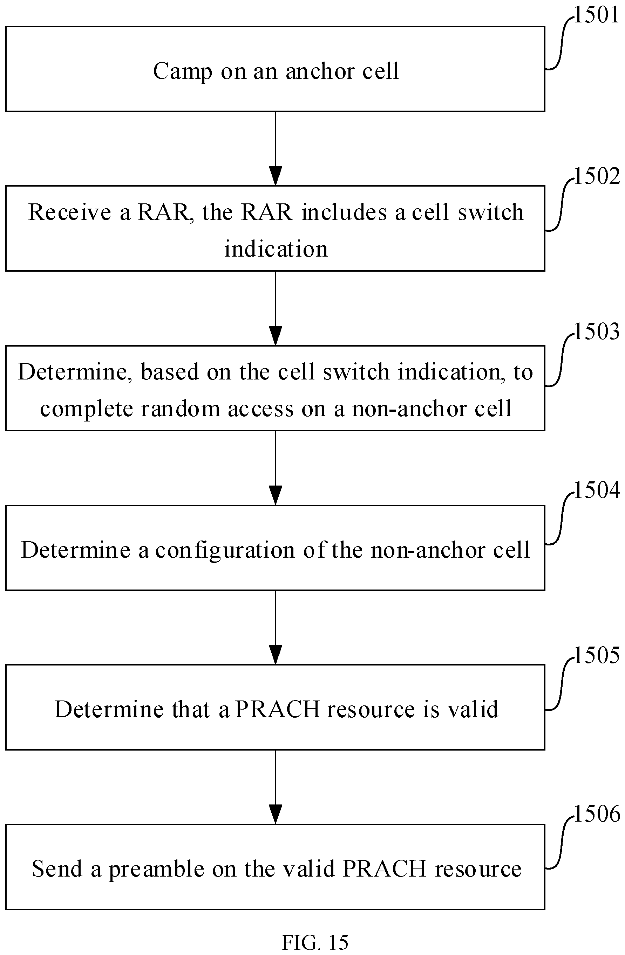

For example, as shown in FIG. 15, the method may be applied to the terminal device 101 in the communication system shown in FIG. 1. The method includes:

In step 1501, the terminal device 101 camps on the anchor cell 104.

In step 1502, the terminal device 101 receives a RAR. The RAR includes a cell switch indication.

In step 1503, the terminal device 101 determines, based on the cell switch indication, to complete random access on the non-anchor cell 103.

Optionally, the terminal device 101 may start completing random access after the first delay, second delay, or third delay.

It may be understood that when completing random access on the non-anchor cell 103, the terminal device 101 needs to determine the configuration of the non-anchor cell 103, and then send the preamble, receive the RAR, and the like by using the configuration of the non-anchor cell 103 to complete random access.

In step 1504, the terminal device 101 determines a configuration of the non-anchor cell 103.

Optionally, the terminal device 101 may determine at least one of a configuration of a PRACH, a configuration of a RAR search space, a configuration of an initial DL BWP, a configuration of an initial UL BWP, and a configuration of SDT on the non-anchor cell 103 according to SIB 1 on the anchor cell 104. In this way, the terminal device 101 may use a PRACH resource, the RAR search space, a resource in the initial DL BWP, a resource in the initial UL BWP, an SDT resource, or the like such that a RAP may be completed.

In step 1505, the terminal device 101 determines that a PRACH resource is valid.

It may be understood that when completing random access on the non-anchor cell 103, the terminal device 101 needs to resend a preamble to initiate random access on the non-anchor cell 103. Before the preamble is sent, a PRACH resource to be used needs to determined.

Optionally, the terminal device 101 may determine that a PRACH resource on the non-anchor cell 103 is valid.

Optionally, the terminal device 101 may determine that a PRACH resource in a PRACH window is valid.

In step 1506, the terminal device 101 sends the preamble on the valid PRACH resource.

In the foregoing method provided in the embodiments of the present disclosure, during the procedure of initiating random access on the anchor cell 104, the terminal device 101 may determine, through the RAR sent by the network side, to complete random access on the non-anchor cell 103, determine the configuration that needs to be used to complete random access on the non-anchor cell 103 in step 1504, and determine that the PRACH resource used by the terminal device 101 to send the preamble is valid in step 1505. In this way, NES and load balancing may be achieved.

It may be understood that the terminal device 101 may determine to initiate random access on the non-anchor cell 103 by using the method provided in any one of the embodiments shown in FIG. 9 to FIG. 13. during the procedure of initiating random access by the terminal device 101, the configuration of the non-anchor cell 103 may be determined through the method provided in the embodiment shown in FIG. 8. In this way, the PRACH configuration of the non-anchor cell 103 may be obtained. Then, a PRACH resource used to initiate random access may be determined to be valid through the method provided in any one of the embodiments shown in FIG. 2 to FIG. 6. In this way, NES and load balancing may be achieved.

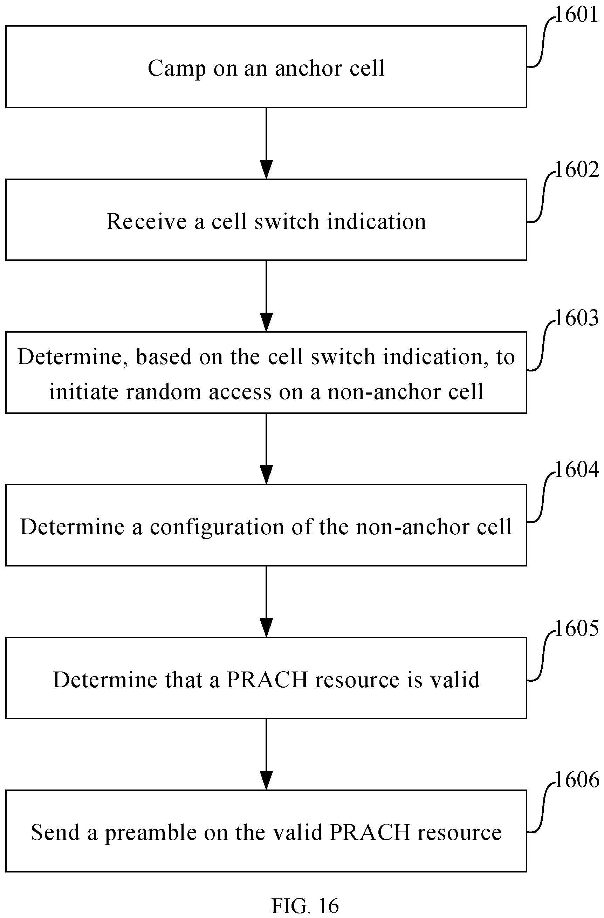

For example, as shown in FIG. 16, the method may be applied to the terminal device 101 in the communication system shown in FIG. 1. The method includes:
In step 1601, the terminal device 101 camps on the anchor cell 104.

In step 1602, the terminal device 101 receives a cell switch indication.

In step 1603, the terminal device 101 determines, based on the cell switch indication, to initiate random access on the non-anchor cell 103.

Optionally, the terminal device 101 may start initiating random access after the first delay, second delay, or third delay.

It may be understood that before initiating random access on the non-anchor cell 103, the terminal device 101 needs to determine the configuration of the non-anchor cell 103, and then send the preamble by using the configuration of the non-anchor cell 103 to initiate random access .

In step 1604, the terminal device 101 determines a configuration of the non-anchor cell 103.

Optionally, the terminal device 101 may determine at least one of a configuration of a PRACH, a configuration of a RAR search space, a configuration of an initial DL BWP, a configuration of an initial UL BWP, and a configuration of SDT on the non-anchor cell 103 according to SIB1 on the anchor cell 104. In this way, the terminal device 101 may use a PRACH resource, the RAR search space, a resource in the initial DL BWP, a resource in the initial UL BWP, an SDT resource, or the like such that a RAP may be completed.

In step 1605, the terminal device 101 determines that a PRACH resource is valid.

It may be understood that when initiating random access on the non-anchor cell 103, the terminal device 101 needs to send a preamble. Before the preamble is sent, a PRACH resource to be used needs to determined.

Optionally, the terminal device 101 may determine that a PRACH resource on the non-anchor cell 103 is valid.

Optionally, the terminal device 101 may determine that a PRACH resource in a PRACH window is valid.

In step 1606, the terminal device 101 sends the preamble on the valid PRACH resource.

The foregoing describes the specific embodiments of the present disclosure. Other embodiments fall within the scope of the appended claims. In some cases, the actions or steps described in the claims may be performed in sequences different from those in the embodiments and still achieve expected results. In addition, the processes depicted in the accompanying drawings do not necessarily require the specific orders or sequential orders shown for achieving the expected results. In some implementations, multitasking and parallel processing are also possible or may be advantageous.

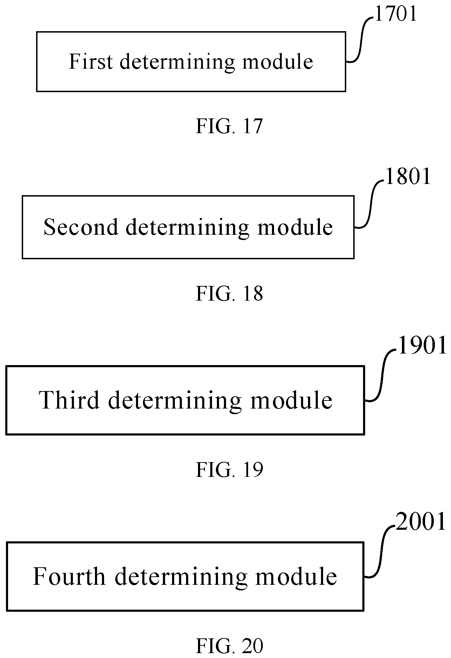

FIG. 17 is a schematic structural diagram of a terminal device 101 according to an embodiment of the present disclosure. As shown in FIG. 17, the terminal device 101 may include a first determining module 1701.

The first determining module 1701 is configured to determine a PRACH window or determine a PRACH burst.

Optionally, the first determining module 1701 includes a first determining unit. The first determining unit is configured to determine that a PRACH in the PRACH window is valid.

Optionally, the first determining unit is specifically configured to determine a period and/or length of the PRACH window.

Optionally, the first determining unit is specifically further configured to determine the period and/or length of the PRACH window according to a higher-layer parameter.

Optionally, the first determining module 1701 further includes a second determining unit. The second determining unit is configured to determine that a PRACH in the PRACH burst is valid.

Optionally, the second determining unit is specifically configured to determine a period and/or duration of the PRACH burst.

Optionally, the second determining unit is specifically further configured to determine the period and/or duration of the PRACH burst according to a higher-layer parameter.

Optionally, the second determining unit is specifically further configured to determine a PRACH period in the period of the PRACH burst.

Optionally, the period of the PRACH burst is greater than the PRACH period in the period of the PRACH burst.

The terminal device 101 provided in the embodiment shown in FIG. 17 may be configured to execute the technical solutions of the method embodiments shown in FIG. 2 to FIG. 6 of this specification. For an implementation principle and a technical effect thereof, reference may be further made to the related description of the method embodiments.

FIG. 18 is a schematic structural diagram of a terminal device 101 according to another embodiment of the present disclosure. As shown in FIG. 18, the terminal device 101 may include a second determining module 1801.

The second determining module 1801 is configured to determine a configuration of a non-anchor cell 103.

Optionally, the configuration of the non-anchor cell 103 includes at least one of the following:
a configuration of a PRACH, a configuration of a RAR search space, a configuration of an initial DL BWP, a configuration of an initial UL BWP, and a configuration of SDT on the non-anchor cell.

Optionally, the second determining module 1801 is specifically configured to determine the configuration of the non-anchor cell 103 according to a parameter on the anchor cell 104.

Optionally, the configuration of the RAR search space includes a CORESET associated with the RAR search space.

The terminal device 101 provided in the embodiment shown in FIG. 18 may be configured to execute the technical solution of the method embodiment shown in FIG. 8 of this specification. For an implementation principle and a technical effect thereof, reference may be further made to the related description of the method embodiment.

FIG. 19 is a schematic structural diagram of a terminal device 101 according to another embodiment of the present disclosure. As shown in FIG. 19, the terminal device 101 may include a third determining module 1901.

The third determining module 1901 is configured to determine, based on a cell switch indication, to initiate random access on a non-anchor cell 103.

In the embodiments of the present disclosure, the cell may be a carrier. The cell switch indication may be a carrier switch indication. Because uplink coverage is often more suitable for the non-anchor cell 103, a network device, such as the base station 102, may indicate the terminal device 101 to use uplink transmission on the non-anchor cell 103. In this case, the cell switch indication may also be a UL switch indication. The UL switch indication may be used in a connected state. The UL switch indication may also be an indication to switch between a non-SUL carrier and an SUL carrier, namely a UL/SUL indicator or a non-SUL/SUL indicator.

Optionally, the cell switch indication may be carried by a paging PDCCH. For example, the cell switch indication may be a bit in the paging PDCCH.

Optionally, the cell switch indication may be carried by a PDCCH specified by the terminal device 101. For example, the cell switch indication may be a bit in the PDCCH specified by the terminal device 101.

Optionally, the cell switch indication may be carried by a paging message. For example, the cell switch indication may be a field in the paging message.

Optionally, the cell switch indication may be carried by a SIB. For example, the cell switch indication may be a field in a SIB.

Optionally, the cell switch indication may be carried by a WUS.

Optionally, the cell switch indication may be carried by a signal or channel corresponding to the WUS, or an indication in a signal or channel corresponding to the WUS.

Optionally, the cell switch indication may be carried by a PEI.

Optionally, the cell switch indication may be carried by a signal or channel corresponding to the PEI, or an indication in a signal or channel corresponding to the PEI.

Optionally, the third determining module 1901 is specifically configured to:
determine, based on the cell switch indication, to initiate random access on the non-anchor cell 103 when determining that one of the following conditions is satisfied: detecting a WUS, detecting a PEI, detecting a paging PDCCH, and detecting that a paging message contains an identifier of the terminal device.

Optionally, detecting the WUS may be detecting a signal or channel corresponding to the WUS, or detecting an indication in a signal or channel corresponding to the WUS.

Optionally, detecting the PEI may be detecting a signal or channel corresponding to the PEI, or detecting an indication in a signal or channel corresponding to the PEI.

Optionally, the terminal device 101 further includes a first initiation module. The first initiation module is configured to: after the third determining module determines, based on the cell switch indication, to initiate random access on the non-anchor cell 103, initiate random access after a first delay.

Optionally, the terminal device 101 further includes a second initiation module. The second initiation module is configured to: after the third determining module determines, based on the cell switch indication, to initiate random access on the non-anchor cell 103, initiate random access after a second delay.

Optionally, the terminal device 101 further includes a third initiation module. The third initiation module is configured to: after the third determining module determines, based on the cell switch indication, to initiate random access on the non-anchor cell 103, initiate random access after a third delay. The third delay is the larger one of a first delay and a second delay, or the third delay is a sum of the first delay and the second delay.

Optionally, a value of the first delay is predefined.

Optionally, the value of the first delay is indicated by a bit in a paging PDCCH.

Optionally, the value of the first delay is indicated by a field in a paging message.

Optionally, the value of the first delay is indicated by a field in a SIB.

Optionally, the value of the first delay is greater than or equal to a minimum interval reported by the terminal device 101.

Optionally, a value of the second delay is predefined.

Optionally, the value of the second delay is indicated by a bit in a paging PDCCH.

Optionally, the value of the second delay is indicated by a field in a paging message.

Optionally, the value of the second delay is indicated by a field in a SIB.

Optionally, the value of the second delay is greater than or equal to a switch time of the non-anchor cell 103.

Optionally, the terminal device further includes a first timer, a starting module, and a fifth determining module.

Optionally, the starting module is configured to start the first timer when the cell switch indication is received.

The fifth determining module is configured to determine to initiate random access on an anchor cell when the first timer expires.

The terminal device 101 provided in the embodiment shown in FIG. 19 may be configured to execute the technical solutions of the method embodiments shown in FIG. 9 to FIG. 13 of this specification. For an implementation principle and a technical effect thereof, reference may be further made to the related description of the method embodiments.

FIG. 20 is a schematic structural diagram of a terminal device 101 according to another embodiment of the present disclosure. As shown in FIG. 20, the terminal device 101 may include a fourth determining module 2001.

The fourth determining module 2001 is configured to determine, based on a cell switch indication, to complete random access on a non-anchor cell 103.

Optionally, the cell switch indication is a bit in a RAR PDCCH.

Optionally, the cell switch indication is a bit in a RAR MAC CE or a field in a RAR message.

Optionally, the cell switch indication is a field in a message 4.

Optionally, the cell switch indication is a field in a SIB.

The terminal device 101 provided in the embodiment shown in FIG. 20 may be configured to execute the technical solution of the method embodiment shown in FIG. 14 of this specification. For an implementation principle and a technical effect thereof, reference may be further made to the related description of the method embodiment.

The random access method provided in the embodiments of the present disclosure may be performed by the following apparatus: a chip or a chip module. The modules/units included in each device or product described in the foregoing embodiments may be software modules/units, hardware modules/units, or partially software modules/units and partially hardware modules/units. For example, for each device or product applied to or integrated in the chip, the modules/units included therein may be implemented through hardware, such as a circuit. Alternatively, at least one module/unit may be implemented through a software program running on a processor integrated in the chip. Different modules/units may be located in a same component (such as a chip or a circuit module) or different components of the chip module. Alternatively, at least one module/unit may be implemented through a software program running on a processor integrated in the chip module, and the other modules/units (if any) may be implemented through hardware, such as a circuit. For each apparatus or product applied to or integrated in a terminal, the modules/units included therein may be implemented through hardware, such as a circuit. Different modules/units may be located in a same component (such as a chip or a circuit module) or different components of the terminal. Alternatively, at least one module/unit may be implemented through a software program running on a processor integrated in the terminal, and the other modules/units (if any) may be implemented through a hardware, such as a circuit.

The embodiments of the present disclosure further provide a chip system, including: a communication interface configured to input and/or output information; and a processor configured to execute a computer program, to enable a device in which the chip system is installed to perform the random access method provided in the embodiments shown in FIG. 2 to FIG. 16 of this specification.

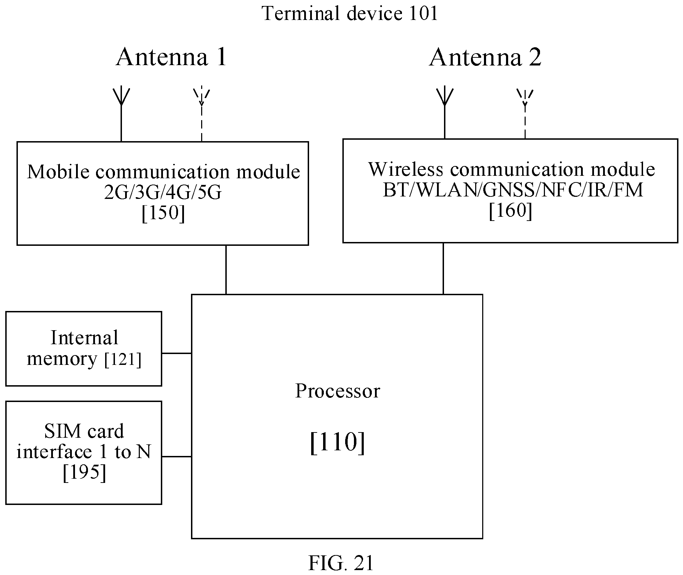

FIG. 21 is a schematic structural diagram of a terminal device 101 according to another embodiment of the present disclosure. As shown in FIG. 21, the terminal device may include at least one processor and at least one memory communicatively connected to the processor. The memory stores a computer program executable by the processor. The processor calls the computer program to perform the random access method provided in the embodiments shown in FIG. 2 to FIG. 16 of this specification.

The terminal device 101 may be an intelligent electronic device, such as a smartphone or a tablet computer. A form of the terminal device 101 is not limited in this embodiment.

For example, FIG. 21 is a schematic structural diagram of the terminal device 101 by using the smartphone as an example. As shown in FIG. 21, the terminal device 101 may include a processor 110, an internal memory 121, an antenna 1, an antenna 2, a mobile communication module 150, a wireless communication module 160, a subscriber identification module (SIM) card interface 195, and the like.

It may be understood that a structure shown in this embodiment of the present disclosure does not constitute a specific limitation on the terminal device 101. In some other embodiments of the present disclosure, the terminal device 101 may include more or fewer components than those shown in the figure, have some components combined, have some components split, or have different component arrangements. The components shown in the figure may be implemented by using hardware, software, or a combination of software and hardware.

The processor 110 may include one or more processing units. For example, the processor 110 may include an application processor (AP), a modem processor, a graphics processing unit (GPU), an image signal processor (ISP), a controller, a video codec, a digital signal processor (DSP), a baseband processor, and/or a neural-network processing unit (NPU). Different processing units may be independent components, or may be integrated into one or more processors.

The controller may generate an operation control signal according to an operation code and a time sequence signal of an instruction, to complete control of instruction fetching and instruction execution.

A memory may be further disposed in the processor 110, and is configured to store instructions and data. In some embodiments, the memory in the processor 110 is a cache. The memory may store an instruction or data that is used or cyclically used by the processor 110. If the processor 110 needs to use the instruction or the data again, the instruction or the data may be directly called from the memory. This avoids repeated access, reduces waiting time of the processor 110, and improves system efficiency.

The processor 110 runs a program stored in the internal memory 121 to execute various functional applications and process data, for example, implement the methods provided in the embodiments shown in FIG. 2 to FIG. 17 of the present disclosure.

In some embodiments, the processor 110 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a SIM interface, a universal serial bus (USB) interface, and/or the like.

A wireless communication function of the terminal device 101 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 101 may be configured to cover one or more communication frequency bands. Different antennas may be further multiplexed to improve antenna utilization. For example, the antenna 1 may be multiplexed as a diversity antenna in a wireless local area network (WLAN). In some other embodiments, an antenna may be used in combination with a tuning switch.

The mobile communication module 150 may provide a wireless communication solution applied to the terminal device 101 and including 2G, 3G, 4G, 5G, or the like. The mobile communication module 150 may include at least one filter, a switch, a power amplifier, a low noise amplifier (LNA), and the like. The mobile communication module 150 may receive an electromagnetic wave through the antenna 1, perform processing such as filtering and amplification on the received electromagnetic wave, and send a processed electromagnetic wave to the modem processor for demodulation. The mobile communication module 150 may further amplify a signal modulated by the modem processor, convert the signal into an electromagnetic wave through the antenna 1, and radiate the electromagnetic wave. In some embodiments, at least one functional module of the mobile communication module 150 may be disposed in the processor 110. In some embodiments, at least one functional module of the mobile communication module 150 and at least one module of the processor 110 may be disposed in a same device.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator sends the demodulated low-frequency baseband signal to the baseband processor for processing. The low-frequency baseband signal is processed by the baseband processor and then sent to the application processor. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the terminal device 101 and that includes a WLAN (for example, a wireless fidelity (Wi-Fi) network), Bluetooth (BT), a global navigation satellite system (GNSS), frequency modulation (FM), near field communication (NFC), infrared (IR), or the like. The wireless communication module 160 may be one or more devices integrating at least one communication processing module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, convert the signal into an electromagnetic wave through the antenna 2, and radiate the electromagnetic wave.

In some embodiments, in the terminal device 101, the antenna 1 and the mobile communication module 150 are coupled and the antenna 2 and the wireless communication module 160 are coupled such that the terminal device 101 may communicate with a network and another device through a wireless communication technology. The wireless communication technology may include a global system for mobile communications (GSM), a general packet radio service (GPRS), code division multiple access (CDMA), wideband code division multiple access (WCDMA), time-division code division multiple access (TD-SCDMA), long term evolution (LTE), BT, a GNSS, a WLAN, NFC, FM, an IR technology, and/or the like.

The NPU is a neural-network (NN) computing processor, which may quickly process input information by learning from a biological NN structure, such as a transmission mode between human brain neurons, and may also continuously self-learn. Applications such as intelligent recognition of the terminal device 101 may be implemented through the NPU, for example, image recognition, face recognition, speech recognition, and text understanding.

The internal memory 121 may be configured to store computer-executable program code. The executable program code includes instructions. The internal memory 121 may include a program storage area and a data storage area. The program storage area may store an operating system, an application needed by at least one function, and the like. The data storage area may store data and the like created during use of the terminal device 101. In addition, the internal memory 121 may include a high-speed random access memory (RAM), or may include a nonvolatile memory, for example, at least one magnetic disk storage device, a flash memory, a universal flash storage (UFS), or the like. The processor 110 runs the instructions stored in the internal memory 121 and/or the instructions stored in the memory disposed in the processor, to perform various functional applications and data processing of the terminal device 101.

The SIM card interface 195 is configured to connect a SIM card. The SIM card may be inserted into the SIM card interface 195 or removed from the SIM card interface 195 to become in contact with or separated from the terminal device 101. The terminal device 101 may support 1 or N SIM card interfaces. N is a positive integer greater than 1. The SIM card interface 195 may support a nano-SIM card, a micro-SIM card, a SIM card, and the like. A plurality of cards may be simultaneously inserted into the same SIM card interface 195. The plurality of cards may be of a same type or different types. The SIM card interface 195 may also be compatible with different types of SIM cards. The SIM card interface 195 may also be compatible with an external memory card. The terminal device 101 interacts with the network through the SIM card to implement functions such as calls and data communication. In some embodiments, the terminal device 101 employs an embedded SIM (eSIM) card. The eSIM card may be embedded in the terminal device 101 and may not be separated from the terminal device 101.

The embodiments of the present disclosure provide a computer-readable storage medium. The computer-readable storage medium stores a computer program. The computer program is executed by a computer to perform the random access methods provided in the embodiment shown in FIG. 2 to FIG. 16 of this specification.

The non-transitory computer-readable storage medium may use any combination of one or more computer-readable media. The computer-readable media each may be a computer-readable signal medium or a computer-readable storage medium. The computer-readable storage medium may be, for example, but not limited to, an electrical, magnetic, optical, electromagnetic, infrared, or semiconductor system, apparatus, or device, or any combination thereof. More specific examples (non-exhaustive) of the computer-readable storage medium include an electrical connection to one or more conducting wires, a portable computer disk, a hard disk, a RAM, a read-only memory (ROM), an erasable programmable ROM (EPROM) or a flash memory, an optical fiber, a portable compact disc ROM (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device.

The computer program code for executing the operations in this specification may be compiled by using one or more program design languages or a combination thereof. The programming languages include object-oriented programming languages, such as Java, Smalltalk, and C++, and conventional procedural programming languages, such as C or similar programming languages. The program code may be executed fully on a user computer, executed partially on a user computer, executed as an independent software package, executed partially on a user computer and partially on a remote computer, or executed fully on a remote computer or a server.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one such feature. In the descriptions of this specification, "a plurality of" means at least two, for example, two or three, unless otherwise specifically limited.

The foregoing descriptions are merely preferred embodiments of this specification, and are not intended to limit this specification. Any modifications, equivalent replacements, improvements, and the like made within the spirit and principle of this specification shall fall within the protection scope of this specification.

## Claims

1. A random access method, applied to a terminal device and comprising:
determining a physical random access channel (PRACH) window or determining a PRACH burst.

2. The method according to claim 1, wherein determining the PRACH window comprises:
determining that a PRACH in the PRACH window is valid.

3. The method according to claim 2, wherein determining that the PRACH in the PRACH window is valid comprises:
determining a period and/or length of the PRACH window.

4. The method according to claim 3, wherein determining the period and/or length of the PRACH window comprises:
determining the period and/or length of the PRACH window according to a higher-layer parameter.

5. The method according to claim 1, wherein determining the PRACH burst comprises:
determining that a PRACH in the PRACH burst is valid.

6. The method according to claim 5, wherein determining that the PRACH in the PRACH burst is valid comprises:
determining a period and/or duration of the PRACH burst.

7. The method according to claim 6, wherein determining the period and/or duration of the PRACH burst comprises:
determining the period and/or duration of the PRACH burst according to a higher-layer parameter.

8. The method according to claim 6, wherein determining the period of the PRACH burst comprises:
determining a PRACH period in the period of the PRACH burst.

9. The method according to claim 8, wherein the period of the PRACH burst is greater than the PRACH period in the period of the PRACH burst.

10. A random access method, applied to a terminal device and comprising:
determining a configuration of a target cell.

11. The method according to claim 10, wherein the configuration of the target cell comprises at least one of the following:
a configuration of a physical random access channel (PRACH), a configuration of a random access response (RAR) search space, a configuration of an initial downlink bandwidth part (DL BWP), a configuration of an initial uplink bandwidth part (UL BWP), and a configuration of small data transmission (SDT) on the target cell.

12. The method according to claim 10, wherein determining the configuration of the target cell comprises:
determining the configuration of the target cell according to a parameter on a source cell.

13. The method according to claim 11, wherein the configuration of the RAR search space comprises a control resource set (CORESET) associated with the RAR search space.

14. A random access method, applied to a terminal device and comprising:
determining, based on a cell switch indication, to initiate random access on a target cell.

15. The method according to claim 14, wherein the cell switch indication is carried by a paging physical downlink control channel (PDCCH).

16. The method according to claim 14, wherein the cell switch indication is carried by a paging message.

17. The method according to claim 14, wherein the cell switch indication is carried by a system information block (SIB).

18. The method according to claim 14, wherein determining, based on the cell switch indication, to initiate random access on the target cell comprises:
determining, by the terminal device based on the cell switch indication, to initiate random access on the target cell when determining that one of the following conditions is satisfied: detecting a wake-up signal (WUS), detecting a paging early indication (PEI), detecting a paging PDCCH, and detecting that a paging message contains an identifier of the terminal device.

19. The method according to claim 18, wherein detecting the WUS comprises: detecting a signal or channel corresponding to the WUS, or detecting an indication in a signal or channel corresponding to the WUS.

20. The method according to claim 18, wherein detecting the PEI comprises: detecting a signal or channel corresponding to the PEI, or detecting an indication in a signal or channel corresponding to the PEI.

21. The method according to claim 14, after determining, based on the cell switch indication, to initiate random access on the target cell, further comprising:
initiating, by the terminal device, random access after a first delay.

22. The method according to claim 14, after determining, based on the cell switch indication, to initiate random access on the target cell, further comprising:
initiating, by the terminal device, random access after a second delay.

23. The method according to claim 14, after determining, based on the cell switch indication, to initiate random access on the target cell, further comprising:
initiating, by the terminal device, random access after a third delay, wherein the third delay is the larger one of a first delay and a second delay, or the third delay is a sum of the first delay and the second delay.

24. The method according to claim 21 or 23, wherein a value of the first delay is predefined.

25. The method according to claim 21 or 23, wherein a value of the first delay is indicated by a bit in a paging PDCCH.

26. The method according to claim 21 or 23, wherein a value of the first delay is indicated by a field in a paging message.

27. The method according to claim 21 or 23, wherein a value of the first delay is indicated by a field in a SIB.

28. The method according to claim 24, wherein the value of the first delay is greater than or equal to a minimum interval reported by the terminal device.

29. The method according to claim 25, wherein the value of the first delay is greater than or equal to a minimum interval reported by the terminal device.

30. The method according to claim 26, wherein the value of the first delay is greater than or equal to a minimum interval reported by the terminal device.

31. The method according to claim 27, wherein the value of the first delay is greater than or equal to a minimum interval reported by the terminal device.

32. The method according to claim 22 or 23, wherein a value of the second delay is predefined.

33. The method according to claim 22 or 23, wherein a value of the second delay is indicated by a bit in a paging PDCCH.

34. The method according to claim 22 or 23, wherein a value of the second delay is indicated by a field in a paging message.

35. The method according to claim 22 or 23, wherein a value of the second delay is indicated by a field in a SIB.

36. The method according to claim 32, wherein the value of the second delay is greater than or equal to a switch time of the target cell.

37. The method according to claim 33, wherein the value of the second delay is greater than or equal to a switch time of the target cell.

38. The method according to claim 34, wherein the value of the second delay is greater than or equal to a switch time of the target cell.

39. The method according to claim 35, wherein the value of the second delay is greater than or equal to a switch time of the target cell.

40. The method according to claim 14, after determining, based on the cell switch indication, to initiate random access on the target cell, further comprising:
starting a first timer when receiving the cell switch indication; and
determining to initiate random access on a source cell when the first timer expires.

41. A random access method, applied to a terminal device and comprising:
determining, based on a cell switch indication, to complete random access on a target cell.

42. The method according to claim 41, wherein the cell switch indication is a bit in a random access response (RAR) physical downlink control channel (PDCCH).

43. The method according to claim 41, wherein the cell switch indication is a bit in a RAR media access control (MAC) control entity or a field in a RAR message.

44. The method according to claim 41, wherein the cell switch indication is a field in a message 4.

45. The method according to claim 41, wherein the cell switch indication is a field in a system information block (SIB).

46. A terminal device, comprising:
a first determining module configured to determine a physical random access channel (PRACH) window or determine a PRACH burst.

47. A terminal device, comprising:
a second determining module configured to determine a configuration of a target cell.

48. A terminal device, comprising:
a third determining module configured to determine, based on a cell switch indication, to initiate random access on a target cell.

49. A terminal device, comprising:
a fourth determining module configured to determine, based on a cell switch indication, to complete random access on a target cell.

50. A chip system, comprising:
a communication interface configured to input and/or output information; and
a processor configured to call a computer program, to enable a device in which the chip system is installed to perform the method according to any one of claims 1 to 45.

51. A terminal device, comprising:
at least one processor; and
at least one memory communicatively connected to the processor;
wherein the memory stores a computer program executable by the processor, and the processor runs the computer program to implement the method according to any one of claims 1 to 45.

52. A computer-readable storage medium, wherein the computer-readable storage medium stores a computer program, and the computer program, when run by a computer, implements the method according to any one of claims 1 to 45.
